# EUROPEAN PATENT APPLICATION

(11) **EP 4 803 982 A1**
(43) Date of publication of application: **09.09.2026**
(21) Application number: 26162500.8
(22) Date of filing: 05.03.2026
(51) Int. Cl.: G06F 3/01, G06N 3/00, G06N 20/00, G06Q 30/00, G06V 10/00, G06V 20/00, G06F 3/048

(54) **PROVIDING SUGGESTIONS BASED ON SAVED CONTENT**

(30) Priority: 07.03.2025 US 202563768519 P; 17.03.2025 US 202563773348 P; 10.02.2026 US 202619535934
(71) Applicant: Apple Inc., Cupertino, CA 95014 (US)
(72) Inventor: EWERS, Paul, Cupertino, 95014 (US); BURGNER, Peter, Cupertino, 95014 (US); FU, Christopher D., Cupertino, 95014 (US); GUI, Yifeng, Cupertino, 95014 (US); JANSEN DOS REIS, Paulo R., Cupertino, 95014 (US); KOVACS, Daniel L., Cupertino, 95014 (US); LOZADA, Richard Ignatius Punsal, Cupertino, 95014 (US); MOORE, Thomas J., Cupertino, 95014 (US); PHIPPS, Benjamin S., Cupertino, 95014 (US); VIJAY, Ashwin K., Cupertino, 95014 (US)
(74) Representative: Zacco Denmark A/S

(57) **Abstract**

Disclosed are techniques for determining and presenting suggested actions based on content such as live views of three-dimensional scenes and saved views of three-dimensional scenes.

## Description

### TECHNICAL FIELD

The present disclosure generally relates to presenting suggested actions that are determined based on views of three-dimensional scenes.

### BACKGROUND

The development of computer systems for interacting with and/or providing three-dimensional scenes has expanded significantly in recent years. Example three-dimensional scenes (e.g., environments) include physical scenes and extended reality scenes.

### SUMMARY

Example methods are disclosed herein. An example method includes: at a first computer system that is in communication with one or more image sensors: receiving a user input corresponding to a request to save an object in a three-dimensional (3D) scene; and in response to receiving the user input corresponding to the request to save the object in the 3D scene, capturing, via the one or more image sensors, a view of the 3D scene; and at a second computer system that is in communication with a display generation component: after the view of the 3D scene is captured via the one or more image sensors, displaying, via the display generation component, a first user interface of a first application, wherein: displaying the first user interface of the first application includes displaying a first suggestion graphical element; the first suggestion graphical element is selectable to cause the second computer system to perform, via a second application different from the first application, a first suggested action; and the first suggested action is determined based on performing image recognition on the view of the 3D scene and based on context information that is different from the view of the 3D scene.

Example non-transitory computer-readable storage media are disclosed herein. An example one or more non-transitory computer-readable storage media store one or more programs configured to be executed by one or more processors of one or more computer systems that are in communication with one or more image sensors and a display generation component. The one or more programs include instructions for: receiving, by a first computer system of the one or more computer systems, a user input corresponding to a request to save an object in a three-dimensional (3D) scene; in response to receiving the user input corresponding to the request to save the object in the 3D scene, capturing, by the first computer system and via the one or more image sensors, a view of the 3D scene; and after the view of the 3D scene is captured via the one or more image sensors, displaying, by a second computer system of the one or more computer systems and via the display generation component, a first user interface of a first application, wherein: displaying the first user interface of the first application includes displaying a first suggestion graphical element; the first suggestion graphical element is selectable to cause the second computer system to perform, via a second application different from the first application, a first suggested action; and the first suggested action is determined based on performing image recognition on the view of the 3D scene and based on context information that is different from the view of the 3D scene.

Example computer systems are disclosed herein. An example one or more computer systems are configured to communicate with one or more image sensors and a display generation component. The one or more computer systems comprise: one or more processors; and memory storing one or more programs configured to be executed by the one or more processors, the one or more programs including instructions for: receiving, by a first computer system of the one or more computer systems, a user input corresponding to a request to save an object in a three-dimensional (3D) scene; in response to receiving the user input corresponding to the request to save the object in the 3D scene, capturing, by the first computer system and via the one or more image sensors, a view of the 3D scene; and after the view of the 3D scene is captured via the one or more image sensors, displaying, by a second computer system of the one or more computer systems and via the display generation component, a first user interface of a first application, wherein: displaying the first user interface of the first application includes displaying a first suggestion graphical element; the first suggestion graphical element is selectable to cause the second computer system to perform, via a second application different from the first application, a first suggested action; and the first suggested action is determined based on performing image recognition on the view of the 3D scene and based on context information that is different from the view of the 3D scene.

An example one or more computer systems are configured to communicate with one or more image sensors and a display generation component. The example one or more computer systems include: means for receiving, by a first computer system of the one or more computer systems, a user input corresponding to a request to save an object in a three-dimensional (3D) scene; means, in response to receiving the user input corresponding to the request to save the object in the 3D scene, for capturing, by the first computer system and via the one or more image sensors, a view of the 3D scene; and means, after the view of the 3D scene is captured via the one or more image sensors, for displaying, by a second computer system of the one or more computer systems and via the display generation component, a first user interface of a first application, wherein: displaying the first user interface of the first application includes displaying a first suggestion graphical element; the first suggestion graphical element is selectable to cause the second computer system to perform, via a second application different from the first application, a first suggested action; and the first suggested action is determined based on performing image recognition on the view of the 3D scene and based on context information that is different from the view of the 3D scene.

Determining and presenting suggestions according to the techniques discussed herein allows a computer system to suggest relevant actions to a user and to efficiently perform the actions. The suggested actions may be presented for content that the user previously saved, thereby allowing a user to save content of interest and to later view relevant suggestions for the saved content of interest. In this manner, the user-device interface is made more efficient and accurate (e.g., by suggesting accurate and relevant actions, by reducing the number of user inputs otherwise required to initiate the actions, by reducing the number of user inputs otherwise required to cancel and/or undo the results of incorrect actions, and/or by helping the user to remember and/or perform desired actions), which additionally reduces power usage and improves battery life of the device by enabling the user to use the device more quickly and efficiently.

In some examples, the computer system (e.g., the first computer system and/or the second computer system) is a desktop computer with an associated display. In some examples, the computer system is a portable device (e.g., a notebook computer, tablet computer, or handheld device such as a smartphone). In some examples, the computer system is a personal electronic device (e.g., a wearable electronic device, such as a watch or a head-mounted device). In some examples, the computer system has a touchpad. In some examples, the computer system has one or more cameras. In some examples, the computer system has a display generation component (e.g., a display device such as a head-mounted display, a display, a projector, a touch-sensitive display (also known as a "touch screen" or "touch-screen display"), or other device or component that presents visual content to a user, for example on or in the display generation component itself or produced from the display generation component and visible elsewhere). In some examples, the computer system does not have a display generation component and does not present visual content to a user. In some examples, the computer system has a touch-sensitive display (also known as a "touch screen" or "touch-screen display"). In some examples, the computer system has one or more eye-tracking components. In some examples, the computer system has one or more hand-tracking components. In some examples, the computer system has one or more output devices, the output devices including one or more tactile output generators and/or one or more audio output devices. In some examples, the computer system has one or more processors, memory, and one or more modules, programs or sets of instructions stored in the memory for performing various functions described herein. In some examples, the user interacts with the computer system through a stylus and/or finger contacts and gestures on the touch-sensitive surface, movement of the user's eyes and hand in space or the user's body as captured by cameras and other movement sensors, and/or voice inputs as captured by one or more audio input devices. Executable instructions for performing these functions are, optionally, included in a transitory and/or non-transitory computer-readable storage medium or other computer program product configured for execution by one or more processors.

Note that the various examples described above can be combined with any other examples described herein. The features and advantages described in the specification are not all inclusive and, in particular, many additional features and advantages will be apparent to one of ordinary skill in the art in view of the drawings, specification, and claims. Moreover, it should be noted that the language used in the specification has been principally selected for readability and instructional purposes, and may not have been selected to delineate or circumscribe the inventive subject matter.

### BRIEF DESCRIPTION OF THE DRAWINGS

For a better understanding of the various described examples, reference should be made to the Detailed Description below, in conjunction with the following drawings in which like reference numerals refer to corresponding parts throughout the figures.
FIG. 1 is a block diagram illustrating an operating environment of a computer system for interacting with three-dimensional (3D) scenes, according to some examples.
FIG. 2 is a block diagram of a user-facing component of the computer system, according to some examples.
FIG. 3A is a block diagram of a controller of the computer system, according to some examples.
FIG. 3B illustrates a block diagram of a component of the controller, according to various examples.
FIG. 3C illustrates a block diagram of a component of the controller, according to various examples.
FIG. 4 illustrates an architecture for a foundation model, according to some examples.
FIGS. 5A-5S illustrate techniques for providing suggestions, according to various examples.
FIG. 6 is a flow diagram of a method for providing suggested actions, according to various examples.

### DETAILED DESCRIPTION

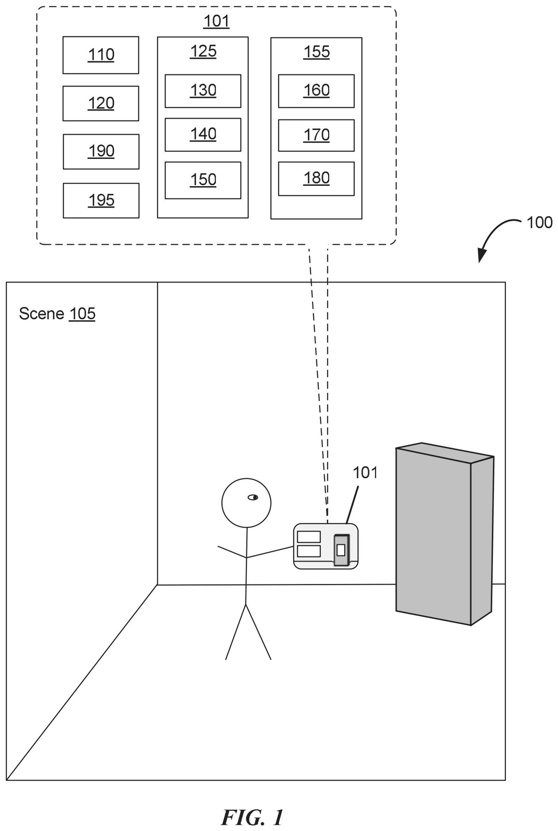

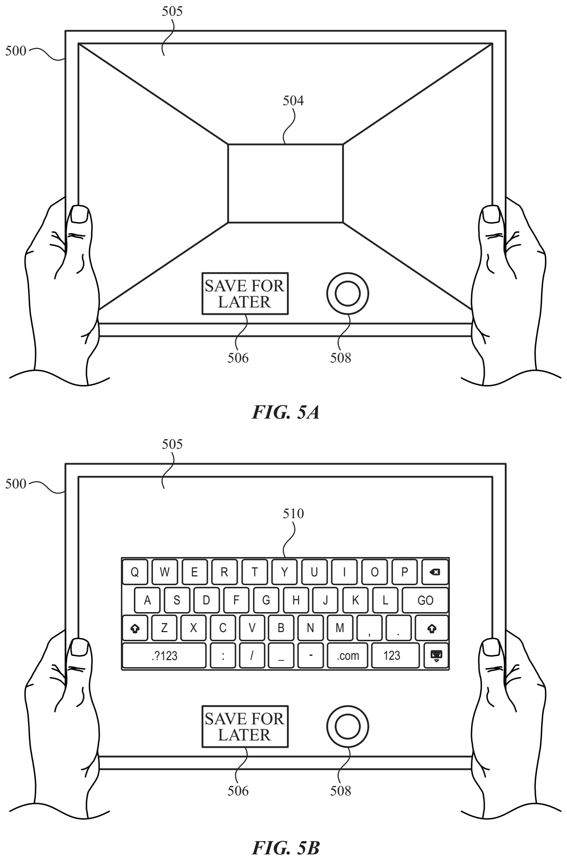

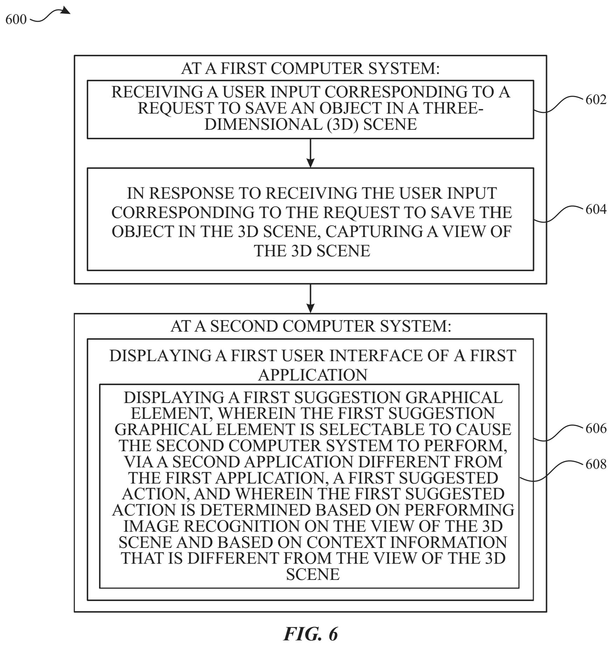

FIGS. 1-4 provide a description of example computer systems and techniques for interacting with three-dimensional scenes. FIGS. 5A-5S illustrate techniques for providing suggestions. FIG. 6 is a flow diagram of a method for providing suggested actions. FIGS. 5A-5S are used to describe the method of FIG. 6.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer-readable medium claims where the system or computer-readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer-readable storage medium can repeat the steps of a method as many times as are needed to ensure that all of the contingent steps have been performed.

FIG. 1 is a block diagram illustrating an operating environment of computer system 101 for interacting with three-dimensional scenes, according to some examples. In FIG. 1, a user interacts with three-dimensional scene 105 via operating environment 100 that includes computer system 101. In some examples, computer system 101 includes controller 110 (e.g., processors of a portable electronic device or a remote server), user-facing component 120, one or more input devices 125 (e.g., eye tracking device 130, hand tracking device 140, and/or other input devices 150), one or more output devices 155 (e.g., speakers 160, tactile output generators 170, and other output devices 180), one or more sensors 190 (e.g., image sensors, light sensors, depth sensors, tactile sensors, orientation sensors, proximity sensors, temperature sensors, location sensors, motion sensors, velocity sensors, audio sensors, etc.), and one or more peripheral devices 195 (e.g., home appliances, wearable devices, etc.). In some examples, one or more of input devices 125, output devices 155, sensors 190, and peripheral devices 195 are integrated with user-facing component 120 (e.g., in a head-mounted device or a handheld device).

While pertinent features of the operating environment 100 are shown in FIG. 1, those of ordinary skill in the art will appreciate from the present disclosure that various other features have not been illustrated for the sake of brevity and so as not to obscure more pertinent aspects of the examples disclosed herein.

Hardware: There are many different types of electronic systems that enable a person to sense and/or interact with three-dimensional scenes. Examples include head-mounted systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head-mounted system may include speakers and/or other audio output devices integrated into the head-mounted system for providing audio output. A head-mounted system may have one or more speaker(s) and an integrated opaque display. Alternatively, a head-mounted system may be configured to accept an external opaque display (e.g., a smartphone). Alternatively, a head-mounted system may be configured to operate without displaying content, e.g., so that the head-mounted system provides output to a user via tactile and/or auditory means. The head-mounted system may incorporate one or more imaging sensors to capture images or video of the physical environment, and/or one or more microphones to capture audio of the physical environment. Rather than an opaque display, a head-mounted system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one example, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

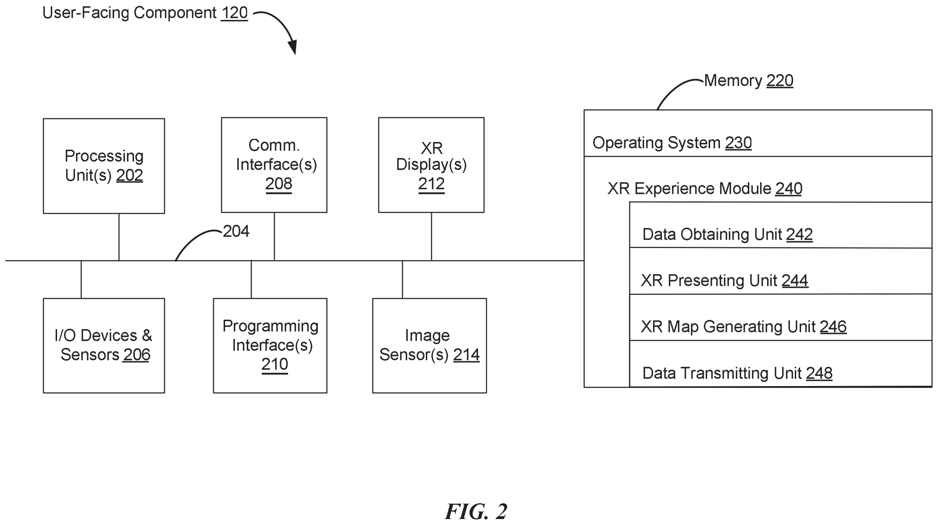

In some examples, user-facing component 120 is configured to provide a visual component of a three-dimensional scene. In some examples, user-facing component 120 includes a suitable combination of software, firmware, and/or hardware. User-facing component 120 is described in greater detail below with respect to FIG. 2. In some examples, the functionalities of controller 110 are provided by and/or combined with user-facing component 120. In some examples, user-facing component 120 provides an extended reality (XR) experience to the user while the user is virtually and/or physically present within scene 105.

In some examples, user-facing component 120 is worn on a part of the user's body (e.g., on his/her head, on his/her hand, etc.). In some examples, user-facing component 120 includes one or more XR displays provided to display the XR content. In some examples, user-facing component 120 encloses the field-of-view of the user. In some examples, user-facing component 120 is a handheld device (such as a smartphone or tablet) configured to present XR content, and the user holds the device with a display directed towards the field-of-view of the user and a camera directed towards the scene 105. In some examples, the handheld device is optionally placed within an enclosure that is worn on the head of the user. In some examples, the handheld device is optionally placed on a support (e.g., a tripod) in front of the user. In some examples, user-facing component 120 is an XR chamber, enclosure, or room configured to present XR content in which the user does not wear or hold user-facing component 120. Many user interfaces described with reference to one type of hardware for displaying XR content (e.g., a handheld device or a device on a tripod) could be implemented on another type of hardware for displaying XR content (e.g., a head-mounted device (HMD) or other wearable computing device). For example, a user interface showing interactions with XR content triggered based on interactions that happen in a space in front of a handheld or tripod-mounted device could similarly be implemented with an HMD where the interactions happen in a space in front of the HMD and the responses of the XR content are displayed via the HMD. Similarly, a user interface showing interactions with XR content triggered based on movement of a handheld or tripod-mounted device relative to the physical environment (e.g., scene 105 or a part of the user's body (e.g., the user's eye(s), head, or hand)) could similarly be implemented with an HMD where the movement is caused by movement of the HMD relative to the physical environment (e.g., scene 105 or a part of the user's body (e.g., the user's eye(s), head, or hand)).

FIG. 2 is a block diagram of user-facing component 120, according to some examples. While certain specific features are illustrated, those skilled in the art will appreciate from the present disclosure that various other features have not been illustrated for the sake of brevity, and so as not to obscure more pertinent aspects of the examples disclosed herein. Moreover, FIG. 2 is intended more as a functional description of the various features that could be present in a particular implementation, as opposed to a structural schematic of the examples described herein. As recognized by those of ordinary skill in the art, components shown separately could be combined and some components could be separated. For example, some functional modules shown separately in FIG. 2 could be implemented in a single module and the various functions of single functional blocks could be implemented by one or more functional blocks in various examples. The actual number of modules and the division of particular functions and how features are allocated among them will vary from one implementation to another and, in some examples, depends in part on the particular combination of hardware, software, and/or firmware chosen for a particular implementation.

In some examples, user-facing component 120 (e.g., HMD) includes one or more processing units 202 (e.g., microprocessors, ASICs, FPGAs, GPUs, CPUs, processing cores, and/or the like), one or more input/output (I/O) devices and sensors 206, one or more communication interfaces 208 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 210, one or more XR displays 212, one or more optional interior- and/or exterior-facing image sensors 214, a memory 220, and one or more communication buses 204 for interconnecting these and various other components.

In some examples, one or more communication buses 204 include circuitry that interconnects and controls communications between system components. In some examples, one or more I/O devices and sensors 206 include at least one of an inertial measurement unit (IMU), an accelerometer, a gyroscope, a thermometer, one or more biometric sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some examples, one or more XR displays 212 are configured to provide an XR experience to the user. In some examples, one or more XR displays 212 correspond to holographic, digital light processing (DLP), liquid-crystal display (LCD), liquid-crystal on silicon (LCoS), organic light-emitting field-effect transistor (OLET), organic light-emitting diode (OLED), surface-conduction electron-emitter display (SED), field-emission display (FED), quantum-dot light-emitting diode (QD-LED), micro-electro-mechanical system (MEMS), and/or the like display types. In some examples, one or more XR displays 212 correspond to diffractive, reflective, polarized, holographic, etc. waveguide displays. For example, user-facing component 120 (e.g., HMD) includes a single XR display. In another example, user-facing component 120 includes an XR display for each eye of the user. In some examples, one or more XR displays 212 are capable of presenting XR content. In some examples, one or more XR displays 212 are omitted from user-facing component 120. For example, user-facing component 120 does not include any component that is configured to display content (or does not include any component that is configured to display XR content) and user-facing component 120 provides output via audio and/or haptic output types.

In some examples, one or more image sensors 214 are configured to obtain image data that corresponds to at least a portion of the face of the user that includes the eyes of the user (and may be referred to as an eye-tracking camera). In some examples, one or more image sensors 214 are configured to obtain image data that corresponds to at least a portion of the user's hand(s) and, optionally, arm(s) of the user (and may be referred to as a hand-tracking camera). In some examples, one or more image sensors 214 are configured to be forward-facing to obtain image data that corresponds to the scene as would be viewed by the user if user-facing component 120 (e.g., HMD) was not present (and may be referred to as a scene camera). One or more optional image sensors 214 can include one or more RGB cameras (e.g., with a complementary metal-oxide-semiconductor (CMOS) image sensor or a charge-coupled device (CCD) image sensor), one or more infrared (IR) cameras, one or more event-based cameras, and/or the like.

Memory 220 includes high-speed random-access memory, such as DRAM, SRAM, DDR RAM, or other random-access solid-state memory devices. In some examples, memory 220 includes non-volatile memory, such as one or more magnetic disk storage devices, optical disk storage devices, flash memory devices, or other non-volatile solid-state storage devices. Memory 220 optionally includes one or more storage devices remotely located from the one or more processing units 202. Memory 220 comprises a non-transitory computer-readable storage medium. In some examples, memory 220 or the non-transitory computer-readable storage medium of memory 220 stores the following programs, modules and data structures, or a subset thereof, including optional operating system 230 and XR experience module 240.

Operating system 230 includes instructions for handling various basic system services and for performing hardware dependent tasks. In some examples, XR experience module 240 is configured to present XR content to the user via one or more XR displays 212 or one or more speakers. To that end, in various examples, XR experience module 240 includes data obtaining unit 242, XR presenting unit 244, XR map generating unit 246, and data transmitting unit 248.

In some examples, data obtaining unit 242 is configured to obtain data (e.g., presentation data, interaction data, sensor data, location data, etc.) from at least controller 110 of FIG. 1. To that end, in various examples, data obtaining unit 242 includes instructions and/or logic therefor, and heuristics and metadata therefor.

In some examples, XR presenting unit 244 is configured to present XR content via one or more XR displays 212 or one or more speakers. To that end, in various examples, XR presenting unit 244 includes instructions and/or logic therefor, and heuristics and metadata therefor.

In some examples, XR map generating unit 246 is configured to generate an XR map (e.g., a 3D map of the extended reality scene or a map of the physical environment into which computer-generated objects can be placed) based on media content data. To that end, in various examples, XR map generating unit 246 includes instructions and/or logic therefor, and heuristics and metadata therefor.

In some examples, data transmitting unit 248 is configured to transmit data (e.g., presentation data, location data, sensor data, etc.) to at least controller 110, and optionally one or more of input devices 125, output devices 155, sensors 190, and/or peripheral devices 195. To that end, in various examples, data transmitting unit 248 includes instructions and/or logic therefor, and heuristics and metadata therefor.

Although data obtaining unit 242, XR presenting unit 244, XR map generating unit 246, and data transmitting unit 248 are shown as residing on a single device (e.g., user-facing component 120 of FIG. 1), in other examples, any combination of data obtaining unit 242, XR presenting unit 244, XR map generating unit 246, and data transmitting unit 248 may reside on separate computing devices.

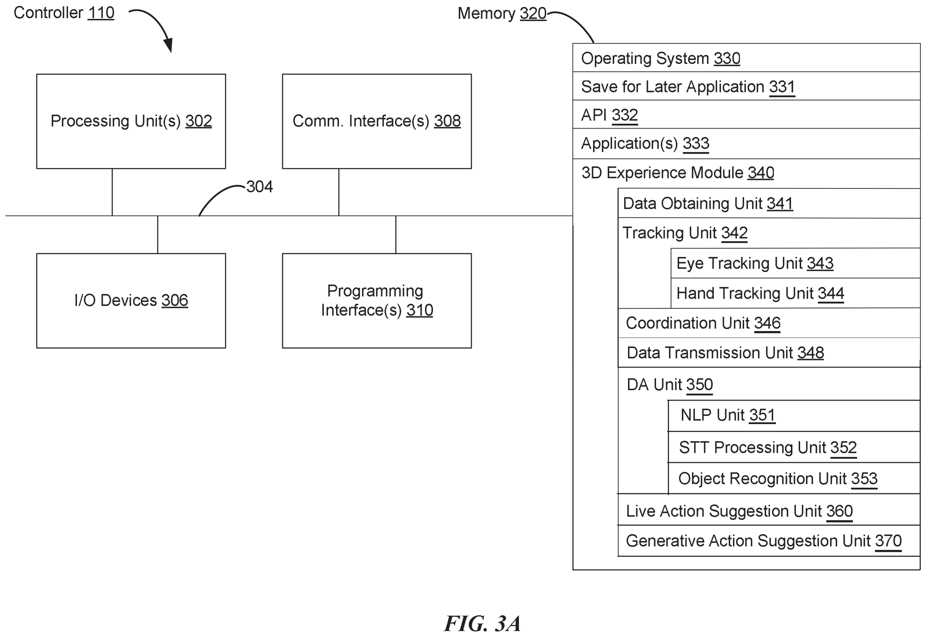

Returning to FIG. 1, controller 110 is configured to manage and coordinate a user's experience with respect to a three-dimensional scene. In some examples, controller 110 includes a suitable combination of software, firmware, and/or hardware. Controller 110 is described in greater detail below with respect to FIGS. 3A-3C.

In some examples, controller 110 is a computing device that is local or remote relative to scene 105 (e.g., a physical environment). For example, controller 110 is a local server located within scene 105. In another example, controller 110 is a remote server located outside of scene 105 (e.g., a cloud server, central server, etc.). In some examples, controller 110 is communicatively coupled with the component(s) of computer system 101 that are configured to provide output to the user (e.g., output devices 155 and/or user-facing component 120) via one or more wired or wireless communication channels (e.g., BLUETOOTH, IEEE 802.11x, IEEE 802.16x, IEEE 802.3x, etc.). In some examples, controller 110 is included within the enclosure (e.g., a physical housing) of the component(s) of computer system 101 that are configured to provide output to the user (e.g., user-facing component 120) or shares the same physical enclosure or support structure with the component(s) of computer system 101 that are configured to provide output to the user.

In some examples, the various components and functions of controller 110 described below with respect to FIGS. 3A-3C, 4, 5A-5S, and 6 are distributed across multiple devices. For example, a first set of the components of controller 110 (and their associated functions) are implemented on a server system remote to scene 105 while a second set of the components of controller 110 (and their associated functions) are local to scene 105. For example, the second set of components are implemented within a portable electronic device (e.g., a wearable device such as an HMD) that is present within scene 105. It will be appreciated that the particular manner in which the various components and functions of controller 110 are distributed across various devices can vary based on different implementations of the examples described herein.

FIG. 3A is a block diagram of controller 110, according to some examples. While certain specific features are illustrated, those skilled in the art will appreciate from the present disclosure that various other features have not been illustrated for the sake of brevity, and so as not to obscure more pertinent aspects of the examples disclosed herein. Moreover, FIG. 3A is intended more as a functional description of the various features that may be present in a particular implementation, as opposed to a structural schematic of the examples described herein. As recognized by those of ordinary skill in the art, components shown separately could be combined and some components could be separated. For example, some functional modules shown separately in FIG. 3A could be implemented in a single module and the various functions of single functional blocks could be implemented by one or more functional blocks in various examples. The actual number of modules and the division of particular functions and how features are allocated among them will vary from one implementation to another and, in some examples, depends in part on the particular combination of hardware, software, and/or firmware chosen for a particular implementation.

In some examples, controller 110 includes one or more processing units 302 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 306, one or more communication interfaces 308 (e.g., universal serial bus (USB), FIREWIRE, THUNDERBOLT, IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 310, memory 320, and one or more communication buses 304 for interconnecting these and various other components.

In some examples, one or more communication buses 304 include circuitry that interconnects and controls communications between system components. In some examples, one or more I/O devices 306 include at least one of a keyboard, a mouse, a touchpad, a joystick, one or more microphones, one or more speakers, one or more image sensors, one or more displays, and/or the like.

Memory 320 includes high-speed random-access memory, such as dynamic random-access memory (DRAM), static random-access memory (SRAM), double-data-rate random-access memory (DDR RAM), or other random-access solid-state memory devices. In some examples, memory 320 includes non-volatile memory, such as one or more magnetic disk storage devices, optical disk storage devices, flash memory devices, or other non-volatile solid-state storage devices. Memory 320 optionally includes one or more storage devices remotely located from the one or more processing units 302. Memory 320 comprises a non-transitory computer-readable storage medium. In some examples, memory 320 or the non-transitory computer-readable storage medium of memory 320 stores the following programs, modules and data structures, or a subset thereof, including operating system 330, save for later application 331, application programming interface (API) 332, application(s) 333, and three-dimensional (3D) experience module 340.

Operating system 330 includes instructions for handling various basic system services and for performing hardware-dependent tasks.

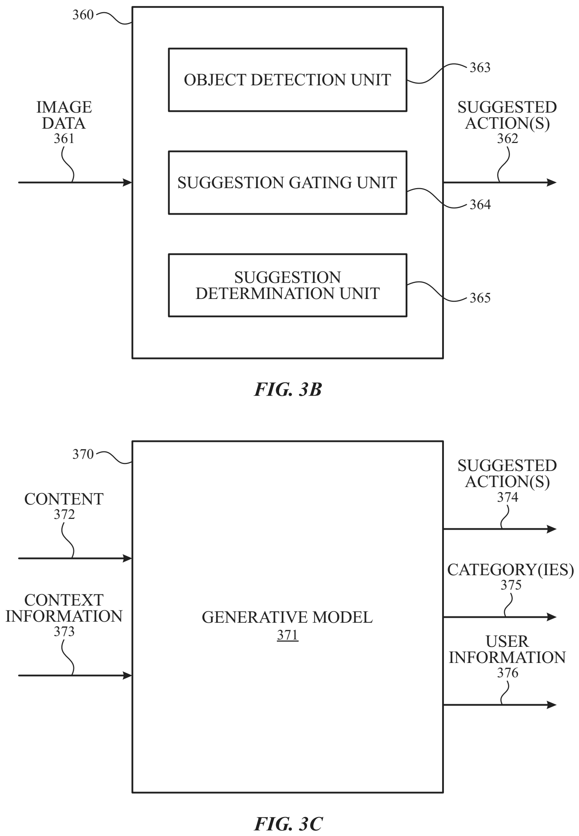

Save for later application 331 is configured to access content saved in an associated repository (e.g., data storage) to determine suggested actions (e.g., 374 in FIG. 3C) based on the content, to organize the content (e.g., by determining category(ies) 375 in FIG. 3C), and/or to determine user information (e.g., 376 in FIG. 3C) based on the content. Example functions of save for later application 331 are described in detail below with respect to generative action suggestion unit 370 of FIG. 3C and are illustrated below in FIGS. 5A-5S. In some examples, the associated repository is implemented, at least partially, in memory 320. In some examples, the repository is implemented in a distributed manner. For example, the repository corresponds to the storage associated with a particular user's cloud storage account.

Various different types of content can be saved in the repository associated with save for later application 331. Examples of such content include various types of data (e.g., image data (e.g., captured via image sensor(s) 214), screenshots, documents, calendar items, music, movies, products, webpages, physical objects, virtual objects, messages, and the like) and/or respective representations of the various types of data. A respective representation of a particular type of data includes, for example, metadata describing the content of the data, e.g., a natural language description of image data and/or a natural language summary of a document. The content is saved in the repository in response to a computer system (e.g., 101, 500, and/or 502) receiving user input of a particular type, referred to herein as "save for later input." In some examples, the save for later input includes a natural language input (e.g., "save this for later"), a touch input, a gesture input, gaze input, and/or input that activates a hardware element. In some examples, the save for later input corresponds to a selection of a save for later graphical element (e.g., 506 in FIGS. 5A-5J), or otherwise corresponds to a request to save the content in the repository associated with save for later application 331.

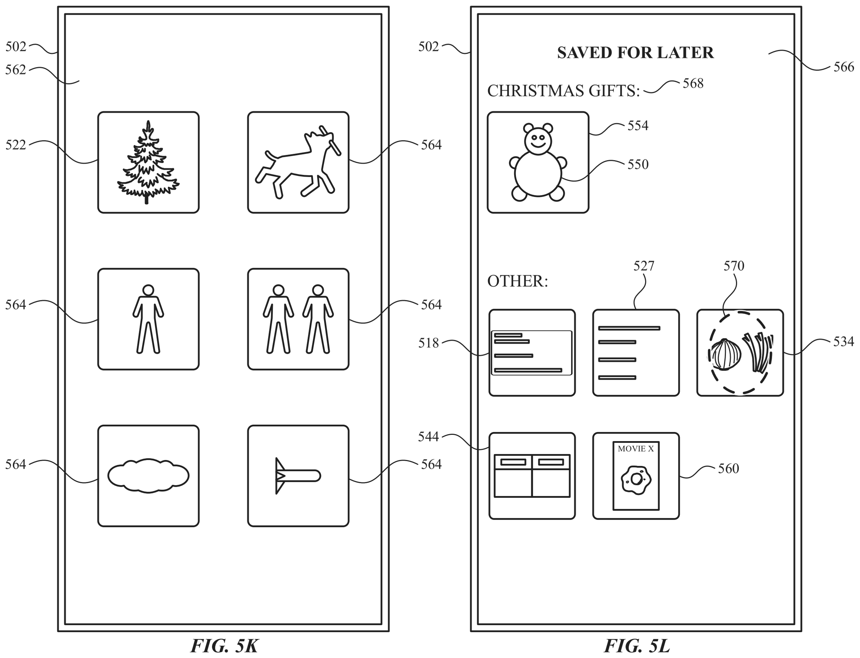

In some examples, controller 110 treats image data captured in response to save for later input differently from image data captured in response to different camera capture input (e.g., input requesting to activate a physical or virtual shutter button to capture an image). Image data captured in response to save for later input is sometimes referred to as a "save for later view," while image data captured in response to different camera capture input is sometimes referred to as a "camera image." A user thus provides different types of input to capture a save for later view and to capture a camera image. For example, while the computer system displays a view of a 3D scene, the computer system concurrently displays a camera capture graphical element (e.g., 508 in FIGS. 5A-5J) and a save for later graphical element (e.g., 506 in FIGS. 5A-5J). In response to receiving input that selects the camera capture graphical element, the computer system captures a camera image of the 3D scene, and in response to receiving input that selects the save for later graphical element, the computer system captures a save for later view of the 3D scene. As another example, in response to activation of a first hardware element, the computer system captures a camera image of the 3D scene, and in response to activation of a different second hardware element, the computer system captures a save for later view of the 3D scene. As another example, in response to natural language input that expresses a camera capture intent (e.g., "take a photo"), the computer system captures a camera image of the 3D scene, and in response to natural language input that expresses a save for later intent (e.g., "save this for later"), the computer system captures a save for later view of the 3D scene. In some examples, save for later views are processed, by default (e.g., without receiving user input further to the save for later input), using one or more of the processes described below with respect to generative action suggestion unit 370 (e.g., to determine suggested action(s) 374, category(ies) 375, and/or user information 376), and camera images are not processed, by default, using one or more of such processes. In some examples, save for later views are available for display, by default, via a user interface of save for later application 331 while camera images are not available for display, by default, via the user interface of save for later application 331. Similarly, in some examples, camera images are available for display, by default, via a user interface of a different photos application (e.g., an application that allows a user to view and/or edit captured photos and/or videos) while save for later views are not available for display, by default, via the user interface of the different photos application. For example, the computer system displays a save for later user interface (e.g., FIG. 5L) dedicated to displaying save for later views, and displays a different photos application user interface (e.g., FIG. 5K) dedicated to displaying captured images and video.

While FIG. 3A illustrates that save for later application 331 is a software component separate from operating system 330, in some examples, the functions of save for later application 331 are implemented by operating system 330. Accordingly, in some examples, the functions of save for later application 331 are provided at an operating system level, without requiring such functions to be implemented in a software module separate from operating system 330.

API 332 provides an interface that allows other application(s) 333 to access and/or use the features provided by save for later application 331 and/or the information (e.g., suggested action(s) 374, category(ies) 375, and/or user information 376) determined by save for later application 331. API 332 similarly provides an interface that allows save for later application 331 to access and/or use features provided by application(s) 333 and/or information determined by application(s) 333. For example, by making an API call via API 332, save for later application 331 can cause an application 333 to initiate a suggested action (e.g., sending a message, making a phone call, setting a calendar entry, booking a flight, and the like) determined by save for later application 331. As another example, by making an API call via API 332, an application 333 obtains user information 376 determined by save for later application 331 for use by application 333.

In some examples, API 332 operates in a privacy preserving manner by limiting and/or preventing the exposure of the user's personal information (e.g., stored in the repository associated with save for later application 331) to application(s) 333. For example, one or more protocols (e.g., as defined via the syntax and/or parameters of permissible API calls) of API 332 prohibit API calls from application(s) 333 that request to access certain types of features of save for later application 331 and/or certain information associated with save for later application 331. As one example, API 332 prohibits an API call from application 333 that requests to access the content saved in the repository but allows an API call from application 333 that requests to access information (e.g., abstracted and/or generalized information) determined from the saved content. As a specific example, suppose that the saved content includes multiple save for later views that collectively indicate a user's favorite movie. Based on the save for later views, save for later application 331 infers the user's favorite movie, e.g., according to the techniques discussed below with respect to generative action suggestion unit 370. API 332 allows a movie application to request, via an API call, the inferred favorite movie (e.g., to later suggest watching and/or purchasing the movie via the movie application) but does not allow the movie application to access the save for later views based upon which the movie is inferred.

In some examples, API 332 implements different protocols for different types of applications 333. For example, API 332 allows first-party applications (e.g., applications preinstalled on the computer system at purchase or provided via an operating system update file) to make API calls that request for certain types of information from save for later application 331 (and allows save for later application 331 to respond to such calls by providing the requested type of information) but prohibits third-party applications (e.g., an application provided via an application store, downloaded via a network, and/or read from a storage device) from making API calls that request for such types of information from save for later application 331. In some examples, API 332 includes multiple different APIs, with each API allowing a respective application 333 to access different features of save for later application 331 and/or different information determined by save for later application 331. For example, one of the APIs is exposed to first-party applications while another one of the APIs is exposed to third-party applications, so different types of applications can access different features and/or data associated with save for later application 331.

While FIG. 3A illustrates that API 332 is a software component separate from operating system 330, in some examples, API 332 is implemented as part of operating system 330. In some examples, API 332 is implemented in part by firmware, microcode, or other low level logic that executes in part on the hardware of the computer system.

Applications 333 include one or more applications for performing various functions. Examples include a web browser application, a fitness application, a health application, a media application, a navigation application, a calendar application, a digital payments application, a camera application, a weather information application, a photo editing application, a word processing application, a drawing application, an application store, an online shopping application, and the like. Applications 333 can include first-party applications and third-party applications.

In some examples, three-dimensional (3D) experience module 340 is configured to manage and coordinate the user experience provided by computer system 101 with respect to a three-dimensional scene. For example, 3D experience module 340 is configured to obtain data corresponding to the three-dimensional scene (e.g., data generated by computer system 101 and/or data from data obtaining unit 341 discussed below) to cause computer system 101 to perform actions for the user (e.g., provide suggestions, display content, etc.) based on the data. To that end, in various examples, 3D experience module 340 includes data obtaining unit 341, tracking unit 342, coordination unit 346, data transmission unit 348, digital assistant (DA) unit 350, live action suggestion unit 360, and generative action suggestion unit 370.

In some examples, data obtaining unit 341 is configured to obtain data (e.g., presentation data, interaction data, sensor data, location data, etc.) from one or more of user-facing component 120, input devices 125, output devices 155, sensors 190, and peripheral devices 195. To that end, in various examples, data obtaining unit 341 includes instructions and/or logic therefor, and heuristics and metadata therefor.

In some examples, tracking unit 342 is configured to map scene 105 and to track the position/location of the user (and/or of a portable device being held or worn by the user). To that end, in various examples, tracking unit 342 includes instructions and/or logic therefor, and heuristics and metadata therefor.

In some examples, tracking unit 342 includes eye tracking unit 343. Eye tracking unit 343 includes instructions and/or logic for tracking the position and movement of the user's gaze (or more broadly, the user's eyes, face, or head) using data obtained from eye tracking device 130. In some examples, eye tracking unit 343 tracks the position and movement of the user's gaze relative to a physical environment, relative to the user (e.g., the user's hand, face, or head), relative to a device worn or held by the user, and/or relative to content displayed by user-facing component 120.

Eye tracking device 130 is controlled by eye tracking unit 343 and includes various hardware and/or software components configured to perform eye tracking techniques. For example, eye tracking device 130 includes at least one eye tracking camera (e.g., infrared (IR) or near-IR (NIR) cameras) and illumination sources (e.g., IR or NIR light sources such as an array or ring of LEDs) that emit light (e.g., IR or NIR light) towards the user's eyes. The eye tracking cameras may be pointed towards the user's eyes to receive reflected IR or NIR light from the light sources directly from the eyes, or alternatively may be pointed towards mirrors that reflect IR or NIR light from the eyes to the eye tracking cameras. Eye tracking device 130 optionally captures images of the user's eyes (e.g., as a video stream captured at 60-120 frames per second), analyzes the images to generate eye tracking information, and communicates the eye tracking information to eye tracking unit 343. In some examples, two eyes of the user are separately tracked by respective eye tracking cameras and illumination sources. In some examples, only one eye of the user is tracked by a respective eye tracking camera and illumination sources.

In some examples, tracking unit 342 includes hand tracking unit 344. Hand tracking unit 344 includes instructions and/or logic for tracking, using hand tracking data obtained from hand tracking device 140, the position of one or more portions of the user's hands and/or motions of one or more portions of the user's hands. Hand tracking unit 344 tracks the position and/or motion relative to scene 105, relative to the user (e.g., the user's head, face, or eyes), relative to a device worn or held by the user, relative to content displayed by user-facing component 120, and/or relative to a coordinate system defined relative to the user's hand. In some examples, hand tracking unit 344 analyzes the hand tracking data to identify a hand gesture (e.g., a pointing gesture, a pinching gesture, a clenching gesture, and/or a grabbing gesture) and/or to identify content (e.g., physical content or virtual content) corresponding to the hand gesture, e.g., content selected by the hand gesture. In some examples, a hand gesture is an air gesture. An air gesture is a gesture that is detected without the user touching (or independently of) an input element that is part of a device (e.g., computer system 101, one or more input devices 125, hand tracking device 140, device 500, and/or device 502) and is based on detected motion of a portion (e.g., the head, one or more arms, one or more hands, one or more fingers, and/or one or more legs) of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

Hand tracking device 140 is controlled by hand tracking unit 344 and includes various hardware and/or software components configured to perform hand tracking and hand gesture recognition techniques. For example, hand tracking device 140 includes one or more image sensors (e.g., one or more IR cameras, 3D cameras, depth cameras, and/or color cameras, etc.) that capture three-dimensional information (e.g., a depth map) that represents a hand of a human user. The one or more image sensors capture the hand images with sufficient resolution to distinguish the fingers and their respective positions. In some examples, the one or more image sensors project a pattern of spots onto an environment that includes the hand and capture an image of the projected pattern. In some examples, the one or more image sensors capture a temporal sequence of the hand tracking data (e.g., captured three-dimensional information and/or captured images of the projected pattern) and hand tracking device 140 communicates the temporal sequence of the hand tracking data to hand tracking unit 344 for further analysis, e.g., to identify hand gestures, hand poses, and/or hand movements.

In some examples, hand tracking device 140 includes one or more hardware input devices configured to be worn and/or held by (or be otherwise attached to) one or more respective hands of the user. In such examples, hand tracking unit 344 tracks the position, pose, and/or motion of a user's hand based on tracking the position, pose, and/or motion of the respective hardware input device. Hand tracking unit 344 tracks the position, pose, and/or motion of the respective hardware input device optically (e.g., via one or more image sensors) and/or based on data obtained from sensor(s) (e.g., accelerometer(s), magnetometer(s), gyroscope(s), inertial measurement unit(s), and the like) contained within the hardware input device. In some examples, the hardware input device includes one or more physical controls (e.g., button(s), touch-sensitive surface(s), pressure-sensitive surface(s), knob(s), joystick(s), and the like). In some examples, instead of, or in addition to, performing a particular function in response to detecting a respective type of hand gesture, computer system 101 analogously performs the particular function in response to a user input that selects a respective physical control of the hardware input device. For example, computer system 101 interprets a pinching hand gesture input as a selection of an in-focus element and/or interprets selection of a physical button of the hardware device as a selection of the in-focus element.

In some examples, coordination unit 346 is configured to manage and coordinate the experience provided to the user via user-facing component 120, one or more output devices 155, and/or one or more peripheral devices 195. To that end, in various examples, coordination unit 346 includes instructions and/or logic therefor, and heuristics and metadata therefor.

In some examples, data transmission unit 348 is configured to transmit data (e.g., presentation data, location data, etc.) to user-facing component 120, one or more input devices 125, output devices 155, sensors 190, and/or peripheral devices 195. To that end, in various examples, data transmission unit 348 includes instructions and/or logic therefor, and heuristics and metadata therefor.

Digital assistant (DA) unit 350 includes instructions and/or logic for providing DA functionality to computer system 101. DA unit 350 therefore provides a user of computer system 101 with DA functionality while they and/or their avatar are present in a three-dimensional scene. For example, the DA performs various tasks related to the three-dimensional scene, either proactively or upon request from the user. In some examples, DA unit 350 performs at least some of: converting speech input into text (e.g., using speech-to-text (STT) processing unit 352); identifying a user's intent expressed in a natural language input received from the user; actively eliciting and obtaining information needed to fully satisfy the user's intent (e.g., by disambiguating terms in the natural language input and/or by obtaining information from data obtaining unit 341); determining a task flow for fulfilling the identified intent; and executing the task flow to fulfill the identified intent.

In some examples, DA unit 350 includes natural language processing (NLP) unit 351 configured to identify the user intent. NLP unit 351 takes the n-best candidate text representation(s) (word sequence(s) or token sequence(s)) generated by STT processing unit 352 and attempts to associate each of the candidate text representations with one or more user intents recognized by the DA. In some examples, a user intent represents a task that can be performed by the DA and has an associated task flow implemented in task flow processing unit 353. The associated task flow is a series of programmed actions and steps that the DA takes in order to perform the task. The scope of a DA's capabilities is, in some examples, dependent on the number and variety of task flows that are implemented in task flow processing unit 353, or in other words, on the number and variety of user intents the DA recognizes.

In some examples, once NLP unit 351 identifies a user intent based on the user request, NLP unit 351 causes task flow processing unit 353 to perform the actions required to satisfy the user request. For example, task flow processing unit 353 executes the task flow corresponding to the identified user intent to perform a task to satisfy the user request. In some examples, performing the task includes causing computer system 101 to provide output (e.g., graphical, audio, and/or haptic output) indicating the performed task.

Live action suggestion unit 360 is configured to cause the computer system to present (e.g., display and/or audibly output) suggested actions based on detected objects in a 3D scene. The suggested actions are presented while a user is immersed in the 3D scene, e.g., while the user perceives a live view of the 3D scene. In some examples, the user perceives a live view of a 3D scene by viewing a displayed live view of the 3D scene, e.g., via a user interface that displays a live view of a 3D scene via pass-through video, such as a user interface of a camera application. In some examples, the user perceives a live view of the 3D scene by directly viewing the 3D scene, without the aid of a display, e.g., when the computer system is not configured to display content. In some examples, the user perceives a live view of the 3D scene by viewing the 3D scene via a transparent or semi-transparent medium that allows light representing the 3D scene to physically pass through the medium.

FIG. 3B illustrates a block diagram of live action suggestion unit 360, according to some examples. As illustrated, live action suggestion unit 360 is configured to determine suggested action(s) 362 based on input image data 361. To that end, live action suggestion unit 360 includes object detection unit 363, suggestion gating unit 364, and suggestion determination unit 365.

Object detection unit 363 is configured to detect an object (e.g., text or other objects) that is present within a 3D scene that is represented by image data 361. For example, object detection unit 363 implements surface scanning techniques and/or text detection techniques to detect the object. In some examples, object detection unit 363 further implements object classification techniques (e.g., using a computer vision model and/or a text classification model) to determine a type and/or sub-type of the detected object. For example, object detection unit 363 classifies an object detected within the 3D scene as text, and further determines the type of the text, e.g., phone number, name, physical address, email address, social media identifier, or the like. As another example, object detection unit 363 classifies an object detected within the 3D scene as a person, a plant, food, a landmark, a body of water, a mountain, or the like.

Suggestion determination unit 365 is configured to determine suggested action(s) 362 based on the type and/or sub-type of an object detected by object detection unit 363. For example, suggestion determination unit 365 implements predetermined rules that map the type and/or sub-type of the object to suggested action(s) 362. As one example, if the object is text, the corresponding suggested action 362 is to read the text aloud via a text-to-speech process. As another example, if the object is text in a foreign language, the corresponding suggested action 362 is to translate the text into the user's native language. As another example, if the object is a phone number, the corresponding suggested actions 362 are to call the phone number and/or to add the phone number to the user's contact list. As another example, if the object is a plant, the corresponding suggested action 362 is to obtain more information about the plant, e.g., obtain the identity of the plant via a web search.

Suggestion gating unit 364 is configured to determine whether one or more suggestion criterion are satisfied, and to cause the computer system to present (e.g., display and/or audibly output) corresponding suggested action(s) 362 if the one or more suggestion criterion are satisfied. If the one or more suggestion criterion are not satisfied, suggestion gating unit 364 causes the computer to forgo presenting suggested action(s) 362. In some examples, a suggestion criterion is satisfied when a confidence score for suggested action 362 (e.g., the confidence with which object detection unit 363 has classified the corresponding object) exceeds a threshold and the suggestion criterion is not satisfied when the confidence score for suggested action 362 does not exceed the threshold. Accordingly, in some examples, suggestion gating unit 364 enables the presentation of suggested action(s) 362 that correspond to objects that are identified/classified with relatively high confidence.

In some examples, suggestion gating unit 364 determines whether a suggestion gating criterion is satisfied by comparing a representation of image data 361 to a representation of a set of one or more gating words. The gating words describe a condition on image data 361, that when satisfied, prevent the presentation of suggested action(s) 362 for image data 361. For example, suppose the gating words are "no words." If image data 361 satisfies the condition of "no words" (meaning that image data 361 depicts no words), suggested action(s) 362 (or at least suggested action(s) 362 determined based on text depicted by image data 361) are not determined and/or presented. This may advantageously prevent the presentation of potentially irrelevant suggestions for image data 361 that depicts letters but not words. For example, when image data 361 depicts a keyboard but does not depict words, the computer system does not present a suggested action to read the letters of the keyboard and/or a suggested action to add a letter of the keyboard to a user's contact list. As another example, suppose the gating words are "flat surface." If image data 361 satisfies the condition of "flat surface" (meaning image data 361 primarily depicts a flat surface), suggested action(s) 362 for image data 361 are not determined and/or presented. This may advantageously prevent the presentation of potentially irrelevant actions for image data 361, e.g., a suggested action to perform a web search for a flat wall.

In some examples, the representation of image data 361 is an image embedding (e.g., vector representation) of image data 361 that is generated by the image encoder component of a computer vision model. In some examples, suggestion gating unit 364 does not further process image data 361 using further components of the computer vision model, such as the components configured to classify image 361 and/or to determine a natural language description of image 361. Accordingly, the generation of the image embedding can be relatively computationally inexpensive compared to the full processing of image data 361 using the computer vision model. In some examples, the representation of the set of one or more gating words is similarly a text embedding of the gating word(s) that is generated by a text encoder. Suggestion gating unit 364 compares the representation of image data 361 to the representation of the gating word(s) by comparing the image embedding to the text embedding (e.g., via cosine similarity). If the embeddings match (e.g., as defined by comparing the cosine similarly score to a threshold) (e.g., meaning that image data 361 satisfies the condition of "no words" or "flat surface"), a suggestion criterion is not satisfied, so suggested action(s) 362 are not determined and/or presented for image data 361. If the embeddings do not match (e.g., meaning that image data 361 does not satisfy the condition of "no words" or "flat surface"), a suggestion criterion is satisfied, so suggested action(s) 362 are determined and/or presented for image data 361.

In some examples, suggestion gating unit 364 generates the representation of image data 361 (e.g., the image embedding) upon determining that a set of image stability criteria are satisfied. For example, suggestion gating unit 364 generates the image embedding if image data 361 is captured during a period of relative stability of the corresponding image sensor, e.g., if movement of the image sensor (and/or the physical component that houses the image sensor) is less than a threshold amount. As another example, suggestion gating unit 364 analyzes image data 361 to determine whether it is a stable image (e.g., is captured during a period of relatively low user movement) and generates image embeddings only for stable images.

In some examples, the set of gating words are determined based on image data 361. For example, suggestion gating unit 364 sets the gating words to be "no words" if object detection unit 363 detects text (e.g., letters) based on image data 361. Otherwise, gating unit 364 sets the gating words to be "flat surface." In this manner, the set of gating words can vary based on the content depicted by image data 361, thereby enabling inappropriate suggested actions to be excluded as the view of a 3D scene changes.

Returning to FIG. 3A, generative action suggestion unit 370 is configured to determine suggested actions based on content saved in the repository associated with save for later application 331, to organize (e.g., assign a category to) the content saved in the repository, and to determine user information based on the saved content.

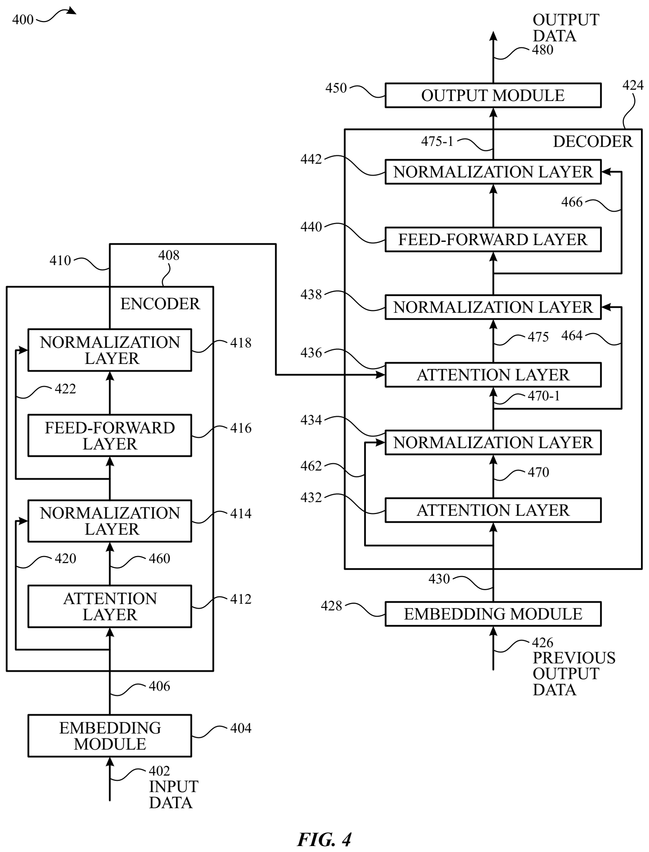

FIG. 3C illustrates a block diagram of generative action suggestion unit 370, according to some examples. Generative action suggestion unit 370 includes generative model 371. By processing input content 372 (e.g., one or more content items saved in the repository) in conjunction with optional context information 373, generative model 371 is configured to determine suggested action(s) 374, category(ies) 375 (e.g., one or more respective categories for one or more of the content items), and/or user information 376 (e.g., user preferences, interests, and/or habits). In some examples, generative model 371 implements an AI model (e.g., a large language model (LLM), such as a multimodal LLM) to perform such functions. The AI model is based on (e.g., is, or is constructed from) a foundation model, as discussed below with respect to FIG. 4. In some examples, generative action suggestion unit 370 is replaced by another unit that is configured to determine, via non-AI based techniques, suggested action(s) 374, category(ies) 375, and/or user information 376 based on input content 372 and optional context information 373. In some examples, the non-AI based techniques are configured to compare an input content item to one or more example content items that each have predefined corresponding suggested action(s) 374, category(ies) 375, and/or user information 376.

Generally, context information 373 provides information additional to a particular content item of input content 372. It will be appreciated that generative model 371 may use context information 373 to determine relevant/accurate suggested action(s) 374 for input content 372, to determine relevant/accurate category(ies) 375 for input content 372, and/or to determine relevant/accurate user information 376 based on input content 372, e.g., more accurate/relevant compared to using only input content 372 to determine such information.

In some examples, context information 373 includes information personal to a user of the computer system (e.g., 500 and/or 502). Example personal information includes contacts data (e.g., the contact information of the user and/or of other users), email data, message data, calendar data, phone data (e.g., call logs and voicemails), location data, reminders data, photos, videos, health information, workout information, financial information, web search history, navigation history, media data (e.g., songs and audiobooks), information related to a user's home (e.g., the states of the user's home appliances and home security systems and/or home security system access information), information about the user's daily routine, digital assistant shortcuts, documents (e.g., notes, journal entries, and/or lists), and the like. In some examples, the personal information includes other content that is saved in the repository associated with save for later application 331. For example, suppose context information 373 includes a screenshot of a recipe that is saved in the repository. The screenshot indicates that the recipe requires celery and onion. Based on such context information 373 and input content 372 that is a save for later view that depicts celery and onion, generative model 371 determines suggested actions 374 to add celery and onion to the user's shopping list and to order celery and onion via a grocery delivery service. As another example, suppose context information 373 includes multiple save for later views that each depict promotional information for a particular movie. Based on such context information 373 and input content 372 that is a screenshot that advertises the particular movie, generative model 371 determines user information 376 indicating that the user is interested in the particular movie.

In some examples, context information 373 includes a location of a computer system when a save for later input for content 372 is received, e.g., the location of the computer system that received the saved for later input. For example, suppose content 372 is a save for later view of a restaurant and context information 373 includes the previous location of the computer system when it received the save for later input. Based on content 372, the previous location of the computer system, and additional context information 373 indicating that the current location of the computer system is nearby the previous location, generative model 371 determines suggested action 374 to order food from the restaurant. In contrast, if context information 373 were not used, generative model 371 may not determine suggested action 374 to order food from the restaurant (as the suggested action to order food from the restaurant may be relevant only when the user is nearby the restaurant), and instead determine a suggested action 374 to search for more information about the restaurant.

In some examples, context information 373 includes scene data (e.g., audio data and/or image data) representing a 3D scene. In some examples the computer system captures such scene data representing the 3D scene before, during, and/or after the computer system receives input to capture a save for later view of a 3D scene. Such scene data may provide additional information relevant to determining suggested action(s) 374 for the save for later view, relevant to determining category(ies) 374 for the save for later view, and/or relevant to determining user information 376 based on the save for later view. For example, suppose content 372 is a save for later view that depicts a particular commercial product. Before the computer system receives the corresponding save for later input, the computer system captures scene data depicting that the commercial product is for sale in a gift shop and indicating that Christmas music is playing in the 3D scene. Based on content 372 and the scene data, generative model 371 determines suggested action 374 to purchase the commercial product and determines category 375 for the commercial product to be a Christmas gift. In some examples, generative action suggestion unit 370 limits the scene data that is used as context information 373 for a particular save for later view to the scene data captured within a first predetermined duration (e.g., 10 seconds, 5 seconds, or 1 second) before the corresponding save for later input is received and/or to scene data captured within a second predetermined duration (e.g., 10 seconds, 5 seconds, or 1 second) after the corresponding save for later input is received. For example, generative action suggestion unit 370 uses scene data captured within 5 seconds before and/or after receiving the save for later input to determine suggested action(s) 374 for the corresponding save for later view.

In some examples, context information 373 includes attention of a user of the computer system, e.g., attention of a user of a computer system when a save for later input for a save for later view is received. Attention of a user can be defined via the gaze direction of the user and/or the pose (e.g., body pose and/or head pose) of the user. Accordingly, in some examples, attention of the user is determined based on data detected via sensors, 190, 214, 130 and/or 140. Attention of the user can indicate one or more elements of content 372 that are in-focus for the user, e.g., element(s) the user pays attention to. For example, suppose content 372 is a save for later view that depicts two different restaurants, and the attention of the user indicates that the user gazes at a first of the two restaurants when the computer system receives the corresponding save for later input. Based on content 372 and the attention of the user, generative model 371 determines suggested action 374 to order food from the first restaurant, but does not determine a suggested action to order food from the second restaurant (or determines a lower confidence score for the suggested action to order food from the second restaurant).

In some examples, live action suggestion unit 360 determines suggested action(s) 362 more quickly than generative action suggestion unit 370 determines suggested action(s) 374. For example, live action suggestion unit 360 determines suggested action(s) 362 within approximately 0.1-0.2 seconds of receiving image data 361, while generative action suggestion unit 370 determines suggested action(s) 374 within approximately 2 seconds of receiving input content 372 (e.g., image data and/or a representation thereof). Such time difference may be because live action suggestion unit 360 implements relatively simple/computationally inexpensive processes (e.g., as discussed above) to determine suggested action(s) 362, while generative action suggestion unit 370 implements relatively complex/computationally expensive processes (e.g., a multimodal LLM) to determine suggested action(s) 374.

Due to this time difference, in some examples, suggested action(s) 362 for a 3D scene are presented live within the 3D scene (e.g., while the user perceives a live view of the 3D scene), while suggested action(s) 374 for the 3D scene may not be presented live within the 3D scene. Instead, in some examples, suggested action(s) 374 are determined and/or presented when the user later navigates to a user interface of save for later application 331. More specifically, in some examples, content 372 (e.g., a save for later view of the 3D scene) is not analyzed with the processes described with respect to generative action suggestion unit 370 until after the content is captured (e.g., in response to save for later input) and/or until after the content (and/or a representation thereof) is saved in the repository associated with save for later application 331. Operating the computer system in such manner may provide an improved user experience by not overwhelming the user with potentially irrelevant suggested actions. For example, while a user is immersed in a 3D scene that includes an object in view, suggested action(s) 362 for the object can be quickly presented before the object moves out of view (e.g., due to user movement). Accordingly, a user may perceive that suggested action(s) 362 are presented substantially instantaneously (e.g., within 0.1-0.2 seconds of detecting the object) for object(s) within the user's field of view. In contrast, suggested action(s) 374 for the object may not be presented until later, because by the time taken (e.g., 2 seconds) to determine suggested action(s) 374, the object may be out of view, so suggested action(s) 374 may be less relevant and/or of less user interest.

In some examples, generative model 371 includes a single generative model that is configured to determine each of suggested action(s) 374, category(ies) 375, and user information 376. In some examples, the single generative model is prompted to generate each of the different types of outputs via different input prompts, e.g., "determine suggested actions based on [X] and [Y]," "determine a category for [X] based on [Y]", and "predict information about the user based on [X] and [Y]," where [X] represents content 372 (e.g., one or more content items saved in the repository associated with save for later application 331) and [Y] represents context information 373. In some examples, generative model 371 includes multiple different generative models, each of which is configured (e.g., fine-tuned and/or trained) to perform one of determining suggested action(s) 374, determining category(ies) 375, and determining user information 376.

In some examples, the above-described functions of generative action suggestion unit 370 are implemented by save for later application 331. For example, while FIG. 3A illustrates that generative action suggestion unit 370 and save for later application 331 are different modules, the functions of generative action suggestion unit 370 and save for later application 331 can be provided by a single module, e.g., by save for later application 331.

In some examples, 3D experience module 340 accesses one or more artificial intelligence (AI) models that are configured to perform various functions described herein. The AI model(s) are at least partially implemented on controller 110 (e.g., implemented locally on a single device, or implemented in a distributed manner) and/or controller 110 communicates with one or more external services that provide access to the AI model(s). In some examples, one or more components and functions of DA unit 350, live action suggestion unit 360, and/or generative action suggestion unit 370 are implemented using the AI model(s). For example, DA unit 350 implements one or more AI models to perform speech recognition, intent determination (e.g., natural language processing and/or image processing), object recognition, and/or response generation and generative action suggestion unit 370 implements one or more AI models to determine suggested action(s) 374, category(ies) 375, and/or user information 376.

In some examples, the AI model(s) are based on (e.g., are, or are constructed from) one or more foundation models. Generally, a foundation model is a deep learning neural network that is trained based on a large training dataset and that can adapt to perform a specific function. Accordingly, a foundation model aggregates information learned from a large (and optionally, multimodal) dataset and can adapt to (e.g., be fine-tuned to) perform various downstream tasks that the foundation model may not have been originally designed to perform. Examples of such tasks include language translation, speech recognition, user intent determination (e.g., natural language processing), sentiment analysis, computer vision tasks (e.g., object recognition and scene understanding), question answering, image generation, audio generation, and generation of computer-executable instructions. Foundation models can accept a single type of input (e.g., text data) or accept multimodal input, such as two or more of text data, image data, video data, audio data, sensor data, and the like. In some examples, a foundation model is prompted to perform a particular task by providing it with a natural language description of the task. Example foundation models include the GPT-n series of models (e.g., GPT-1, GPT-2, GPT-3, and GPT-4), DALL-E, and CLIP from Open AI, Inc., Florence and Florence-2 from Microsoft Corporation, BERT from Google LLC, and LLaMA, LLaMA-2, and LLaMA-3 from Meta Platforms, Inc.

FIG. 4 illustrates architecture 400 for a foundation model, according to some examples. Architecture 400 is merely exemplary and various modifications to architecture 400 are possible. Accordingly, the components of architecture 400 (and their associated functions) can be combined, the order of the components (and their associated functions) can be changed, components of architecture 400 can be removed, and other components can be added to architecture 400. Further, while architecture 400 is transformer-based, one of skill in the art will understand that architecture 400 can additionally or alternatively implement other types of machine learning models, such as convolutional neural network (CNN)-based models and recurrent neural network (RNN)-based models.

Architecture 400 is configured to process input data 402 to generate output data 480 that corresponds to a desired task. Input data 402 includes one or more types of data, e.g., text data, image data, video data, audio data, sensor (e.g., motion sensor, biometric sensor, temperature sensor, and the like) data, computer-executable instructions, structured data (e.g., in the form of an XML file, a JSON file, or another file type), and the like. In some examples, input data 402 includes data from data obtaining unit 341. Output data 480 includes one or more types of data that depend on the task to be performed. For example, output data 480 includes one or more of: text data, image data, audio data, and computer-executable instructions. It will be appreciated that the above-described input and output data types are merely exemplary and that architecture 400 can be configured to accept various types of data as input and generate various types of data as output. Such data types can vary based on the particular function the foundation model is configured to perform.

Architecture 400 includes embedding module 404, encoder 408, embedding module 428, decoder 424, and output module 450, the functions of which are now discussed below.

Embedding module 404 is configured to accept input data 402 and parse input data 402 into one or more token sequences. Embedding module 404 is further configured to determine an embedding (e.g., a vector representation) of each token that represents each token in embedding space, e.g., so that similar tokens have a closer distance in embedding space and dissimilar tokens have a further distance. In some examples, embedding module 404 includes a positional encoder configured to encode positional information into the embeddings. The respective positional information for an embedding indicates the embedding's relative position in the sequence. Embedding module 404 is configured to output embedding data 406 of the input data by aggregating the embeddings for the tokens of input data 402.

Encoder 408 is configured to map embedding data 406 into encoder representation 410. Encoder representation 410 represents contextual information for each token that indicates learned information about how each token relates to (e.g., attends to) each other token. Encoder 408 includes attention layer 412, feed-forward layer 416, normalization layers 414 and 418, and residual connections 420 and 422. In some examples, attention layer 412 applies a self-attention mechanism on embedding data 406 to calculate an attention representation (e.g., in the form of a matrix) of the relationship of each token to each other token in the sequence. In some examples, attention layer 412 is multi-headed to calculate multiple different attention representations of the relationship of each token to each other token, where each different representation indicates a different learned property of the token sequence. Attention layer 412 is configured to aggregate the attention representations to output attention data 460 indicating the cross-relationships between the tokens from input data 402. In some examples, attention layer 412 further masks attention data 460 to suppress data representing the relationships between select tokens. Encoder 408 then passes (optionally masked) attention data 460 through normalization layer 414, feed-forward layer 416, and normalization layer 418 to generate encoder representation 410. Residual connections 420 and 422 can help stabilize and shorten the training and/or inference process by respectively allowing the output of embedding module 404 (i.e., embedding data 406) to directly pass to normalization layer 414 and allowing the output of normalization layer 414 to directly pass to normalization layer 418.

While FIG. 4 illustrates that architecture 400 includes a single encoder 408, in other examples, architecture 400 includes multiple stacked encoders configured to output encoder representation 410. Each of the stacked encoders can generate different attention data, which may allow architecture 400 to learn different types of cross-relationships between the tokens and generate output data 410 based on a more complete set of learned relationships.

Decoder 424 is configured to accept encoder representation 410 and previous output embedding 430 as input to generate output data 480. Embedding module 428 is configured to generate previous output embedding 430. Embedding module 428 is similar to embedding module 404. Specifically, embedding module 428 tokenizes previous output data 426 (e.g., output data 480 that was generated by the previous iteration), determines embeddings for each token, and optionally encodes positional information into each embedding to generate previous output embedding 430.

Decoder 424 includes attention layers 432 and 436, normalization layers 434, 438, and 442, feed-forward layer 440, and residual connections 462, 464, and 466. Attention layer 432 is configured to output attention data 470 indicating the cross-relationships between the tokens from previous output data 426. Attention layer 432 is similar to attention layer 412. For example, attention layer 432 applies a multi-headed self-attention mechanism on previous output embedding 430 and optionally masks attention data 470 to suppress data representing the relationships between select tokens (e.g., the relationship(s) between a token and future token(s)) so architecture 400 does not consider future tokens as context when generating output data 480. Decoder 424 then passes (optionally masked) attention data 470 through normalization layer 434 to generate normalized attention data 470-1.

Attention layer 436 accepts encoder representation 410 and normalized attention data 470-1 as input to generate encoder-decoder attention data 475. Encoder-decoder attention data 475 correlates input data 402 to previous output data 426 by representing the relationship between the output of encoder 408 and the previous output of decoder 424. Attention layer 436 allows decoder 424 to increase the weight of the portions of encoder representation 410 that are learned as more relevant to generating output data 480. In some examples, attention layer 436 applies a multi-headed attention mechanism to encoder representation 410 and to normalized attention data 470-1 to generate encoder-decoder attention data 475. In some examples, attention layer 436 further masks encoder-decoder attention data 475 to suppress the cross-relationships between select tokens.

Decoder 424 then passes (optionally masked) encoder-decoder attention data 475 through normalization layer 438, feed-forward layer 440, and normalization layer 442 to generate further-processed encoder-decoder attention data 475-1. Normalization layer 442 then provides further-processed encoder-decoder attention data 475-1 to output module 450. Similar to residual connections 420 and 422, residual connections 462, 464, and 466 may stabilize and shorten the training and/or inference process by allowing the output of a corresponding component to directly pass as input to a corresponding component.

While FIG. 4 illustrates that architecture 400 includes a single decoder 424, in other examples, architecture 400 includes multiple stacked decoders each configured to learn/generate different types of encoder-decoder attention data 475. This allows architecture 400 to learn different types of cross-relationships between the tokens from input data 402 and the tokens from output data 480, which may allow architecture 400 to generate output data 480 based on a more complete set of learned relationships.

Output module 450 is configured to generate output data 480 from further-processed encoder-decoder attention data 475-1. For example, output module 450 includes one or more linear layers that apply a learned linear transformation to further-processed encoder-decoder attention data 475-1 and a softmax layer that generates a probability distribution over the possible classes (e.g., words or symbols) of the output tokens based on the linear transformation data. Output module 450 then selects (e.g., predicts) an element of output data 480 based on the probability distribution. Architecture 400 then passes output data 480 as previous input data 426 to embedding module 428 to begin another iteration of the training and/or inference process for architecture 400.

It will be appreciated that various different AI models can be constructed based on the components of architecture 400. For example, some large language models (LLMs) (e.g., GPT-2 and GPT-3) are decoder-only (e.g., include one or more instances of decoder 424 and do not include encoder 408), some LLMs (e.g., BERT) are encoder-only (include one or more instances of encoder 408 and do not include decoder 424), and other foundation models (e.g., Florence-2) are encoder-decoder (e.g., include one or more instances of encoder 408 and include one or more instances of decoder 424). Further, it will be appreciated that the foundation models constructed based on the components of architecture 400 can be fine-tuned based on reinforcement learning techniques and training data specific to a particular task for optimization for the particular task, e.g., extracting relevant semantic information from image and/or video data, generating code, generating music, providing suggestions relevant to a specific user, and the like.

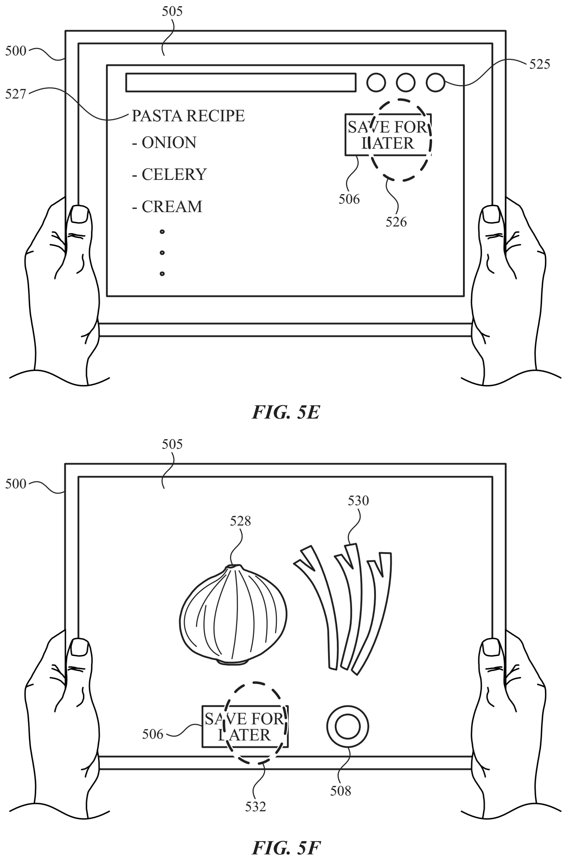

FIGS. 5A-5S illustrate techniques for providing suggestions, according to various examples. FIGS. 5A-5D and 5F-5J illustrate a user's view of respective 3D scenes and FIGS. 5E and 5K-5S illustrate content (e.g., a webpage and user interfaces of applications) displayed by device 500 or device 502. In some examples, device 500 provides at least a portion of the 3D scenes of FIGS. 5A-5D and 5F-5J. For example, the 3D scenes are XR scenes that include at least some virtual elements generated by device 500. In other examples, the 3D scenes are physical scenes.

While the example of FIGS. 5K-5S illustrate that device 502 (a device different from device 500) displays the respective content, in other examples, device 500 instead displays the respective content. Accordingly, device 500 and device 502 can be the same device.

Device 500 implements at least some of the components of computer system 101 and/or user-facing component 120. Device 502 implements at least some of the components of computer system 101. In the example of FIGS. 5A-5J, device 500 is a tablet device owned by a user and device 502 is a smartphone device owned by the same user. In the example of FIGS. 5A-5D and 5F-5J, a user holds device 500 and the user views the respective 3D scene via pass-through video displayed by device 500.

In other examples, at least one of devices 500 or 502 is a different type of device. For example, device 500 is instead a wearable device (e.g., earbuds, headphones, a smart watch, or an HMD (e.g., an XR headset or a pair of glasses)) and device 502 is instead a tablet device owned by the same user. When device 500 is an HMD, the 3D scenes of 5A-5D and 5F-5J are viewed via the HMD. For example, the 3D scenes of FIGS. 5A-5D and 5F-5Jcan be physical scenes viewed via pass-through video, physical scenes viewed via direct optical see-through via a transparent component of the HMD, or virtual scenes viewed via one or more displays of the HMD. In some examples, device 500 does not include any display, and the 3D scenes of FIGS. 5A-5D and 5F-5Jare physical scenes directly viewed by the user.

In FIGS. 5A-5D and5F-5J, the user and device 500 are present within the respective 3D scenes. For example, the 3D scenes are physical or extended reality scenes and the user and device 500 are physically present within the 3D scenes. In other examples, an avatar of the user is present within the scenes. For example, when the scenes are virtual reality scenes, the avatar of the user is present within the virtual reality scenes.

In FIG. 5A, device 500 displays a view of a 3D scene that includes flat surface 504. The view of the 3D scene (e.g., a live view of the 3D scene) is displayed in camera user interface 505 (e.g., a user interface for a camera application on device 500) and camera user interface 505 includes save for later graphical element 506 and camera capture graphical element (e.g., a shutter button) 508. When selected, save for later graphical element 506 causes device 500 to capture a save for later view of the current 3D scene. When selected, camera capture graphical element 508 causes device 500 to capture a camera image of the current 3D scene.

In FIG. 5A, based on captured image data, device 500 detects flat surface 504. Device 500 compares a representation of the image data to a representation of the gating words "flat surface" and determines that the representations match (e.g., that the image data primarily depicts a flat surface), e.g., according to the techniques discussed above with respect to suggestion gating unit 364. Because the representations match, device 500 does not present any suggested actions for flat surface 504.

In FIG. 5B, device 500 displays a view of a 3D scene that includes keyboard 510. Based on captured image data, device 500 detects keyboard 510 and sets the gating words to be "no words." Device 500 compares a representation of the image data to a representation of the gating words and determines that the representations match (e.g., that the image data does not include any words), e.g., according to the techniques discussed above with respect to gating unit 364. Because the representations match, device 500 does not present any suggested actions for keyboard 510, such as suggested actions to speak the letters of keyboard 510 via a text-to-speech and to summarize the text on keyboard 510.

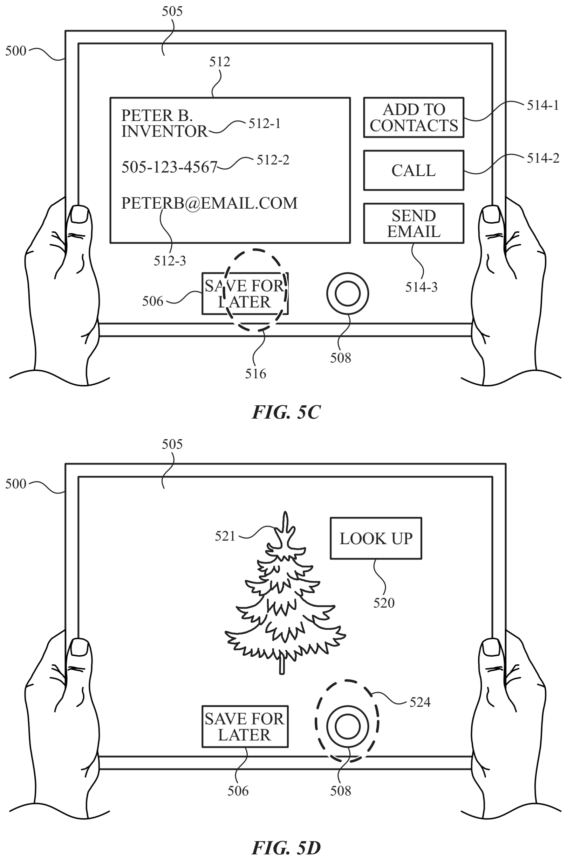

In FIG. 5C, device 500 displays a view of a 3D scene that includes business card 512. Business card 512-1 includes name 512-1, phone number 512-2, and email address 512-3. Based on captured image data, device 500 detects business card 512 and the associated text. Device 500 compares a representation of the image data to a representation of the gating words "no words" and determines that the representations do not match (e.g., that the image data includes words). Because the representations do not match, device 500 displays suggested actions 514-1 (to add name 512-1 to the user's contacts list), 514-2 (to call phone number 512-2), and 514-3 (to send an email to email address 512-3) (e.g., suggested actions 362 determined according to the techniques discussed above with respect to live action suggestion unit 360) in camera user interface 505 that includes a live view of the 3D scene of FIG. 5C.

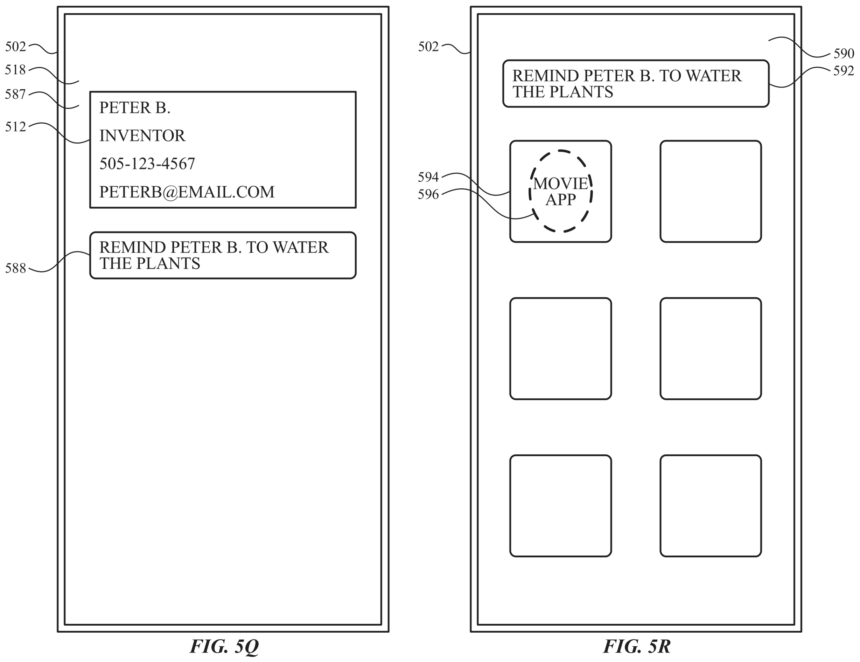

In FIG. 5C, device 500 receives touch input 516 that selects save for later graphical element 506. In response to receiving touch input 516, device 500 captures save for later view 518 (FIGS. 5L and 5Q) of the 3D scene (including business card 512) and saves save for later view 518 in the repository associated with save for later application 331.

In FIG. 5D, device 500 displays a view of a 3D scene that includes tree 521. Device 500 further displays suggested action 520 to search for additional information about tree 521, e.g., via an image search provided by a web browser application. Device 500 determines suggested action 520 according to the techniques discussed above with respect to live action suggestion unit 360. In FIG. 5D, device 500 receives touch input 524 that selects camera capture graphical element 508. In response to receiving touch input 524, device captures camera image 522 (FIG. 5K) that includes tree 521.

In FIG. 5E, device 500 displays web browser user interface 525. Web browser user interface 525 includes recipe 527 for pasta that requires celery and onions. Web browser user interface 525 further includes save for later graphical element 506. In FIG. 5D, device 500 receives touch input 526 that selects save for later graphical element 506, and in response, device 500 saves recipe 527 in the repository associated with save for later application 331.

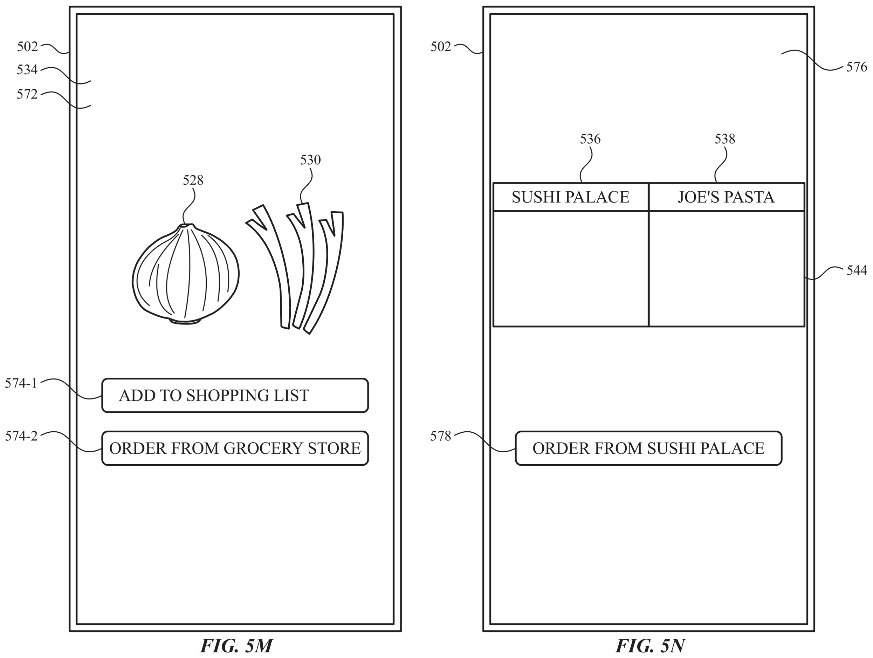

In FIG. 5F, device 500 displays a view of a 3D scene that includes onion 528 and celery 530. In FIG. 5F, device 500 further receives touch input 532 that selects save for later graphical element 506. In response to receiving touch input 532, device 500 captures save for later view 534 (in FIGS. 5L and 5M) of the 3D scene that includes onion 528 and celery 530 and saves save for later view 534 in the repository associated with save for later application 331.

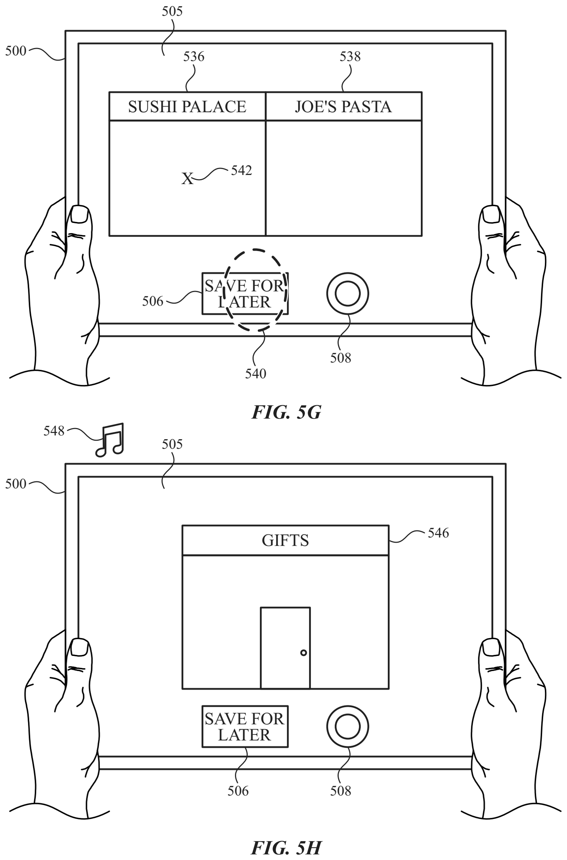

In FIG. 5G, device 500 displays a view of a 3D scene that includes restaurant 536 and restaurant 538. Device 500 further receives touch input 540 that selects save for later graphical element 506. Device 500 further detects attention of the user, e.g., by detecting user gaze that is directed to the location of restaurant 536 when touch input 540 is received, as indicated by gaze location 542. In response to receiving touch input 540, device 500 captures save for later view 544 (in FIGS. 5L and 5N) of the 3D scene that includes restaurant 536 and restaurant 538 and device 500 saves the save for later view 544 in the repository associated with save for later application 331.

In FIG. 5H, device 500 displays a view of a 3D scene that includes gift shop 546. The 3D scene also includes Christmas music 548 playing in the background. Device 500 detects scene data (e.g., image data and audio data) that depicts gift shop 546 and that indicates Christmas music 548 is playing in the background.

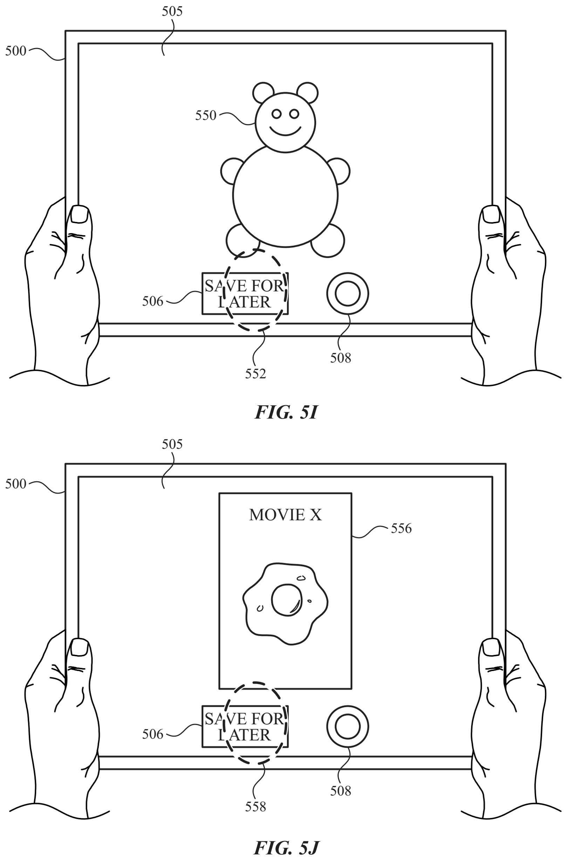

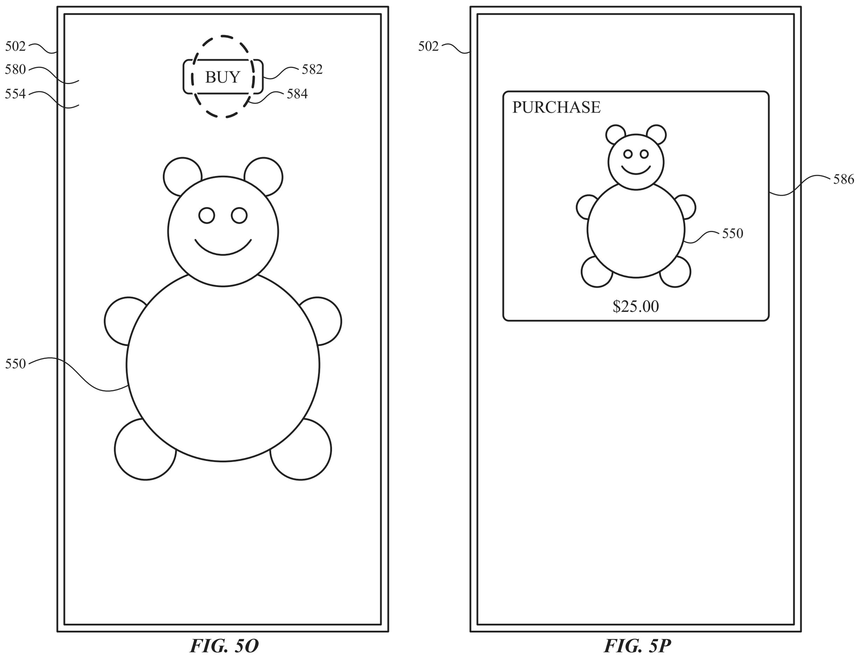

In FIG. 5I, shortly after device 500 displays the view of the 3D scene of FIG. 5H, device 500 displays a view of a 3D scene that includes gift 550 that is for sale in gift shop 546. For example, shortly after viewing the scene of FIG. 5H, the user walks into gift shop 546 and is now viewing gift 550 for potential purchase. In FIG. 5I, device 500 receives touch input 552 that selects save for later graphical element 506. In response to receiving touch input 552, device 500 captures save for later view 554 (FIGS. 5L and 5O) that includes gift 550 and saves save for later view 554 in the repository associated with save for later application 331.

In FIG. 5J, device 500 displays a view of a 3D scene that includes promotional poster 556 for a movie named "movie X." Device 500 receives touch input 558 that selects save for later graphical element 506 and in response, captures save for later view 560 (FIG. 5L) that includes promotional poster 556 and saves save for later view 560 in the repository associated with save for later application 331.

For simplicity of description, FIGS. 5F-5J illustrate that device 500 does not present live suggested actions that are determined based on the respective live views of the respective 3D scene. However, in some examples, in one or more of FIGS. 5F-5J, device 500 presents one or more live suggested actions (e.g., 362) that are determined for one or more objects in the 3D scenes of FIGS. 5F-5J. For example, in FIG. 5J, while device 500 displays the live view of the corresponding 3D scene, device 500 displays a suggested action to summarize the text included in promotional poster 556.

While the examples of FIGS. 5A-5J describe that save for later views and/or camera images are captured in response to device 500 receiving touch input, in other examples, device 500 receives another type of input (e.g., speech input, gaze input, gesture input, air gesture input, and/or input via a peripheral device) to capture a save for later view or a camera image. Further, as discussed above with respect to FIGS. 3A-3C, saving a save for later view in the repository associated with save for later application 331 includes saving the corresponding image data, saving a representation of the image data (e.g., metadata that describes the content depicted by the image data) without saving the image data, or saving both the image data and the representation of the image data.

Turning now to FIGS. 5K-5S, the content is displayed by device 502 in FIGS. 5K-5S after the interactions described with respect to FIGS. 5A-5J, e.g., after the described save for later views/camera images are captured.

In FIG. 5K, device 502 displays user interface 562 of a photos application of device 502 (e.g., an application that enables a user to view and/or edit captured images and/or video). User interface 562 includes the user's library of captured images and video. For example, user interface 562 includes camera image 522 (e.g., captured in response to touch input 524 in FIG. 5D) and other camera images 564 (e.g., other recently captured camera images). Notably, none of save for later views 518, 534, 544, 554, or 560 are displayed (and/or are available for display) in user interface 562.

In FIG. 5L, device 502 displays user interface 566 of save for later application 331. User interface 566 includes saved for later views 518, 534, 544, 554, and 560 and includes recipe 527 (e.g., the content captured in response to save for later inputs 516, 526, 532, 540, 552, and 558). Notably, camera image 522 is not displayed (and is not available for display) in user interface 566. Accordingly, FIGS. 5K-5L illustrate that different user interfaces of different applications (e.g., a photos application and save for later application 331) respectively provide access to camera images and to save for later content (e.g., save for later views). In other examples, a single application (e.g., a photos application or save for later application 331) provides access to both camera images (e.g., 522) and save for later views (e.g., 518, 534, 544, 554, and 560), e.g., via first user interface of the single application that provides access to the camera images and via a different second user interface of the single application that provides access to the save for later views. In some examples, a single user interface of the single application provides access to both camera images and save for later views. For example, save for later views/content are displayed in a user's photo library concurrently with camera images.

In FIG. 5L, user interface 566 includes indication 568 that gift 550 has been assigned (e.g., classified) to the category of "Christmas gift." Device 502 determines the category (e.g., as one of category(ies) 375) according to the techniques discussed above with respect to generative action suggestion unit 370. Specifically, based on view 554 of the 3D scene of FIG. 5I and based on scene data for the 3D scene of FIG. 5H (e.g., indicating that shortly before view 554 was captured, the 3D scene included Christmas music 548 playing and gift shop 546), device 502 determines the category of "Christmas gift" for gift 550.

In FIG. 5L, device 502 receives touch input 570 that selects save for later view 534. In response to touch input 570, in FIG. 5M, device 502 displays user interface 572 (e.g., of save for later application 331) that includes an expanded version of save for later view 534, e.g., the save for later view that was previously captured when device 500 and the user were present in the scene of FIG. 5E. In FIGS. 5L-5S, the user and device 502 are not present in the 3D scenes of FIGS. 5A-5D and 5F-5J. For example, the user is instead at home and is using device 502 to review their previously captured save for later content (e.g., save for later views) for suggested actions.

In FIG. 5M, user interface 572 includes suggested action 574-1 to add onion 528 and celery 530 to the user's shopping list and suggested action 574-2 to initiate an order for onion and celery via a grocery delivery application. Device 502 determines suggested actions 574-1 and 574-2 (e.g., as two of suggested action(s) 374) according to the techniques discussed above with respect to generative action suggestion unit 370. Specifically, device 502 determines suggested actions 574-1 and 574-2 based on save for later view 534 and based on recipe 527. For example, based on saved recipe 527 that requires celery and onions, device 502 infers that the actions of "add to shopping list" and "order from grocery store" are relevant for save for later view 534 that includes onion 528 and celery 530.

In FIG. 5N, device 502 displays user interface 576 (e.g., of save for later application 331) that includes an expanded view of save for later view 544. Device 502 displays user interface 576 in response to receiving a user input that selects save for later view 544 in FIG. 5L. User interface 576 includes suggested action 578 to order food from restaurant 536. Device 502 determines suggested action 578 (e.g., as one of suggested action(s) 374) according to the techniques discussed above with respect to generative action suggestion unit 370. Specifically, device 502 determines suggested action 578 based on save for later view 544, user attention data that indicates that user gaze (e.g., as indicated by gaze location 542) was directed to restaurant 536 when touch input 540 was received (FIG. 5G), the location of device 500 when touch input 540 was received, and the current location of device 502. For example, based on gaze data indicating that the user is more interested in restaurant 536 (than restaurant 538) and based on location data indicating that the current location of device 502 is nearby the location of restaurant 536, device 500 infers that ordering food from restaurant 536 (instead of restaurant 538) is relevant for save for later view 544.

In FIG. 5O, device 502 displays user interface 580 (e.g., of save for later application 331) that includes an expanded view of save for later view 554. Device 502 displays user interface 580 in response to receiving a user input that selects save for later view 554 in FIG. 5L. User interface 580 includes suggested action 582 to purchase gift 550, e.g., from an online retailer. Device 502 determines suggested action 582 (e.g., as one of suggested action(s) 374) according to the techniques discussed above with respect to generative action suggestion unit 370. Specifically, device 502 determines suggested action 582 based on save for later view 554 and scene data for the 3D scene of FIG. 5H (e.g., scene data depicting gift shop 546).

In FIG. 5O, device 502 receives touch input 584 that selects suggested action 582. In response to touch input 584, in FIG. 5P, device 502 initiates suggested action 582. Specifically, in FIG. 5P, device 502 displays user interface 586 for an online retailer application and allows the user to purchase gift 550.

In FIG. 5Q, device 502 displays user interface 587 (e.g., of save for later application 331) that includes an expanded view of save for later view 518. Device 502 displays user interface 587 in response to receiving a user input that selects save for later view 518 in FIG. 5L. User interface 587 includes suggested action 588 to send a message to Peter B. that reminds him to water the plants. Device 502 determines suggested action 588 (e.g., as one of suggested action(s) 374) according to the techniques discussed above with respect to generative action suggestion unit 370. Specifically, device 502 determines suggested action 588 based on save for later view 518 and reminders data that indicates the user has a reminder to "ask Peter B. to water the plants." For example, based on the reminders data and save for later view 518 that depicts business card 512 for Peter B., device 502 infers the action of sending a message to Peter B. to remind him to water the plants.

FIGS. 5C and 5Q illustrate that a first type of suggested action (e.g., 514-1, 514-2, 514-3, and/or 362) for an object (e.g., 512) in a 3D scene is presented while the user is provided with a live view of the 3D scene, while a different second type of suggested action (e.g., 588 and/or 374) for the same object is not presented while the user is provided with a live view of the 3D scene. Instead, the second type of suggested actions is determined and/or presented later, e.g., after device 500 receives save for later input (e.g., 516) for the object, after the corresponding view (e.g., 518) is saved in the repository, and while the user views a user interface (e.g., 587) of save for later application 331. As discussed above with respect to generative action suggestion unit 370, the second type of suggested action may not be presented while the user is provided with the live view of the 3D scene because the second type of suggested action may take longer to determine, as compared to the first type of suggested action. For example, suggested actions 514-1, 514-2, and 514-3 in FIG. 5C are relatively generic actions for business card 512 that are determined via a relatively computationally inexpensive process (e.g., as described with respect to live action suggestion unit 360). In contrast, suggested action 588 in FIG. 5Q is a personalized action for business card 512 that is determined via relatively computationally expensive process (e.g., as described with respect to generative action suggestion unit 370).

In FIG. 5R, device 502 displays a user interface 590 (e.g., a home screen user interface) that is different from a user interface of save for later application 331. Device 502 displays suggested action 592 to remind Peter B. to water the plants (e.g., as a notification graphical element) over user interface 590. Device 502 determines suggested action 592 in the same way as it determined suggested action 588 (e.g., based on save for later view 518 and context information 372).

FIGS. 5Q-5R illustrate that some suggested actions (e.g., 574-1, 574-2, 578, 582, and/or 588) are presented in user interfaces (e.g., 572, 576, 580, and/or 587) of save for later application 331, while other suggested actions (e.g., 592) are presented in a different user interface (e.g., 590), such as a home screen user interface, a lock screen user interface, and/or a user interface of another application. In some examples, device 502 presents a suggested action in the different user interface (e.g., as a notification on a home screen, a lock screen, and the like) if the suggested action satisfies one or more criteria, e.g., if the suggested action has a confidence score (e.g., determined by generative model 371) that exceeds a threshold, if the same suggested action is determined by generative action suggestion unit 370 greater than a threshold number of times, if the suggested action is to be initiated by a predetermined application, if the suggested action is to contact a predetermined contact (e.g., person), and/or if the suggested action has an urgency value (e.g., determined by generative model 371) that exceeds a threshold.

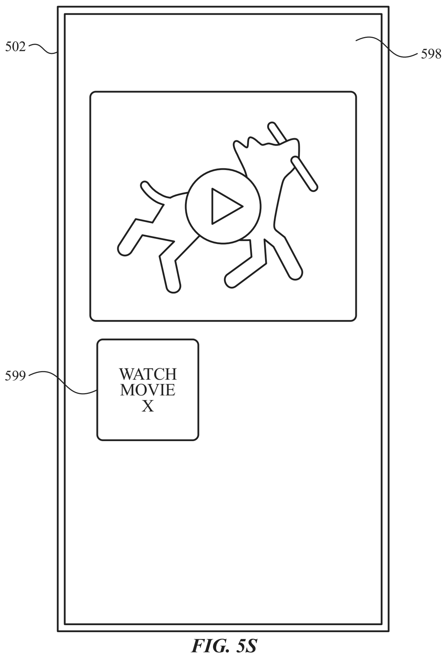

In FIGS. 5R-5S generative action suggestion unit 370 has determined, based on save for later view 560 (FIG. 5J), user information (e.g., 376) indicating that the user is interested in movie X. In FIG. 5R, device 502 receives touch input 596 that selects icon 594 for a movie streaming application. In FIG. 5S, in response to receiving touch input 596, device 502 displays movie streaming application user interface 598. Movie streaming application user interface 598 includes suggestion 599 for the user to watch the movie named movie X. To display suggestion 599, the movie streaming application has requested the user information (e.g., via an API call via API 332) from save for later application 331.

Other applications can request user information (e.g., 376) in a similar manner. For example, an online shopping application requests, from save for later application 331, information that indicates potential products and/or product categories of user interest (e.g., to suggest the products and/or product categories for purchase). As another example, a music application requests, from save for later application 331, information that indicates the user's media preferences (e.g., to create personalized playlists for the user). In some examples, the application requests for the user information via an API call via API 332. In some examples, the application requests for the user information periodically (e.g., once a day, once an hour, or the like), upon installation, upon installation of an update for the application, upon launch of the application (e.g., each time the application is launched), and/or upon receiving a user input that instructs the application to obtain such information. As discussed above with respect to API 332, save for later application 331 can provide the user information (e.g., 376) to a requesting application in a privacy preserving manner, e.g., by providing abstracted and/or generalized user information, but without providing the save for later views and/or content (e.g., 554, 518, 527, 570, 544, and 560).

Additional descriptions regarding FIGS. 5A-5S are provided below in reference to method 600 described below with respect to FIG. 6.

FIG. 6 is a flow diagram of a method 600 for providing suggested actions, according to various examples. In some examples, method 600 is performed at a first computer system (e.g., a first instance of computer system 101, device 500, and/or user-facing component 120) that is in communication with one or more image sensors and at a second computer system (e.g., a second instance of computer system 101 and/or device 502) that is in communication with a display generation component. In some examples, method 600 is governed by instructions that are stored in one or more non-transitory (or transitory) computer-readable storage media and that are executed by one or more processors of the first computer system and/or the second computer system, e.g., 202 and/or 302. In some examples, the operations of method 600 are distributed across multiple computer systems, e.g., the first computer system, the second computer system, and a separate server system. Some operations in method 600 are, optionally, combined, the orders of some operations are, optionally, changed, and some operations are, optionally, omitted.

Method 600 includes, at the first computer system, receiving (602) a user input (e.g., save for later input) (e.g., 516, 532, 540, 552, and/or 558) corresponding to a request to save an object (e.g., 512, 528, 530, 536, 550, and/or 556) in a three-dimensional (3D) scene.

Method 600 includes, at the first computer system, in response to receiving the user input corresponding to the request to save the object in the 3D scene, capturing (604), via the one or more image sensors, a view of the 3D scene (e.g., 554, 518, 534, 544, and/or 560).

Method 600 includes, at the second computer system, after the view of the 3D scene is captured via the one or more image sensors, displaying (606), via the display generation component, a first user interface of a first application (e.g., 572, 576, 580, and/or 587), wherein: displaying the first user interface of the first application includes displaying (608) a first suggestion graphical element (e.g., 574-1, 574-2, 578, 582, and/or 588); the first suggestion graphical element is selectable to cause the second computer system to perform, via a second application (e.g., 333) different from the first application, a first suggested action (e.g., 374); and the first suggested action is determined (e.g., by generative action suggestion unit 370) based on performing image recognition on the view of the 3D scene (e.g., 554, 518, 534, 544, and/or 560) and based on context information (e.g., 373) that is different from the view of the 3D scene.

In some examples, method 600 includes, at the second computer system: while displaying, via the display generation component, the first user interface of the first application (e.g., 580), receiving a user input (e.g., 584) corresponding to a selection of the first suggestion graphical element (e.g., 582); and in response to receiving the user input corresponding to the selection of the first suggestion graphical element, initiating, via the second application, the first suggested action (e.g., as illustrated in FIG. 5P).

In some examples, the first computer system is the second computer system.

In some examples, the first computer system is different from the second computer system.

In some examples, the user input (e.g., 516, 532, 540, 552, and/or 558) corresponding to the request to save the object in the 3D scene corresponds to a first type of user input (e.g., a save for later input) and method 600 includes, at the first computer system: receiving a user input (e.g., 524) corresponding to a request to capture an image of the 3D scene, wherein the user input corresponding to the request to capture an image of the 3D scene corresponds to a second type of user input (e.g., camera capture input) different from the first type of user input; and in response to receiving the user input corresponding to the request to capture an image of the of 3D scene, capturing, via the one or more image sensors, a respective image (e.g., 522) of the 3D scene.

In some examples, method 600 includes, at the first computer system: concurrently displaying a save graphical element (e.g., 506) and an image capture graphical element (e.g., 508), wherein the user input corresponding to the request to save the object in the 3D scene corresponds to a selection of the save graphical element, and wherein the user input (e.g., 524) corresponding to the request to capture an image of the 3D scene corresponds to a selection of the image capture graphical element.

In some examples, method 600 includes, at the second computer system: displaying, via the display generation component, a second user interface (e.g., 566) of the first application, wherein displaying the second user interface of the first application includes displaying the view of the 3D scene (e.g., 554, 518, 534, 544, and/or 560), and wherein the respective image of the 3D scene (e.g., 522) is not available for display in the second user interface of the first application; and displaying, via the display generation component, a first user interface (e.g., 562) of a third application different from the first application, wherein displaying the first user interface of the third application includes displaying the respective image of the 3D scene (e.g., 522), and wherein the view of the 3D scene (e.g., 554, 518, 534, 544, and/or 560) is not available for display in the first user interface of the third application. In some examples, any image captured in response to receiving user input of the second type is not available for display in the second user interface of the first application. In some examples, any image captured in response to receiving user input of the second type is not available for display via any user interface of the first application. In some examples, any view captured in response to receiving user input of the first type is not available for display in the first user interface of the third application. In some examples, any view captured in response to receiving user input of the first type is not available for display via any user interface of the third application.

In some examples, method 600 includes, at the second computer system: displaying, via the display generation component, a third user interface (e.g., 566) of the first application (e.g., save for later application 331), wherein displaying the third user interface of the first application includes displaying the view of the 3D scene, and wherein the respective image of the 3D scene is not available for display in the third user interface of the first application; and displaying, via the display generation component, a fourth user interface of the first application, wherein the fourth user interface of the first application is different from the third user interface of the first application, and wherein displaying the fourth user interface of the first application includes displaying the respective image of the 3D scene, and wherein the view of the 3D scene is not available for display in the fourth user interface of the first application. In some examples, any image captured in response to receiving user input of the second type is not available for display in the third user interface of the first application. In some examples, any view captured in response to receiving user input of the first type is not available for display in the fourth user interface of the first application.

In some examples, the context information (e.g., 373) includes information that is personal to a user of the first computer system and/or the second computer system.

In some examples, information that is personal to the user includes a second object (e.g., 554, 518, 527, 534, 544, 560, 512, 528, 530, 536, 538, 550, and/or 556) that is saved in association with the first application (e.g., saved in the repository associated with the first application), wherein the second object is different from the object in the 3D scene.

In some examples, the context information (e.g., 373) includes a location of the first computer system when the user input (e.g., 516, 532, 540, 552, and/or 558) corresponding to the request to save the object in the 3D scene is received.

In some examples, method 600 further includes, at the first computer system: capturing data representing the 3D scene (e.g., the 3D scene of FIG. 5H), wherein the data representing the 3D scene is different from the view of the 3D scene (e.g., 554), and wherein the context information (e.g., 373) includes the data representing the 3D scene.

In some examples, method 600 further includes, at the first computer system: detecting attention of a user of the first computer system (e.g., as described with respect to FIG. 5G), wherein the context information (e.g., 373) includes the attention of the user of the first computer system.

In some examples, method 600 further includes, at the second computer system: displaying, via the display generation component, an indication (e.g., 568) that the object (e.g., 550) is assigned to a first category (e.g., category(ies) 375), wherein the first category is determined (e.g., by generative action suggestion unit 370) based on the context information.

In some examples, displaying the first user interface (e.g., 572) of the first application further includes displaying a second suggestion graphical element (e.g., 574-1 and/or 574-2); the second suggestion graphical element is selectable to cause the second computer system to perform, via a fourth application (e.g., 333), a second suggested action; and the second suggested action is determined based on performing image recognition on the view of the 3D scene (e.g., 534) and based on the context information (e.g., 373).

In some examples, the fourth application is different from the second application.

In some examples, method 600 further includes, at the first computer system: before receiving the user input (e.g., 516, 532, 540, 552, and/or 558) corresponding to the request to save the object in the 3D scene: detecting, via the one or more image sensors, a respective object (e.g., 512) in the 3D scene; and in response to detecting, via the one or more image sensors, the respective object in the 3D scene: in accordance with a determination that a suggestion criterion is satisfied, presenting a third suggested action (e.g., 362, 514-1, 514-2, and/or 514-3) that is determined (e.g., by live action suggestion unit 360) based on the respective object; and in accordance with a determination that the suggestion criterion is not satisfied, forgoing presenting the third suggested action.

In some examples, method 600 further includes, at the first computer system, displaying a camera user interface (e.g., 505), wherein presenting the third suggested action that is determined based on the respective object includes displaying the third suggested action in the camera user interface.

In some examples, the third suggested action (e.g., 362, 514-1, 514-2, and/or 514-3) is determined based on analyzing the view 3D scene with a first type of process (e.g., one or more processes described above with respect to live action suggestion unit 360).

In some examples, the first suggested action (e.g., 374, 574-1, 574-2, 578, 582, and/or 588) is determined based on analyzing the view of the 3D scene with a second type of process (e.g., one or more processes described above with respect to generative action suggestion unit 370) different from the first type of process.

In some examples, the view of the 3D scene (e.g., 518) is not analyzed with the second type of process until after the view of the 3D scene is captured and after a first representation of the view of the 3D scene (and/or the view of the 3D scene) is saved in association with the first application (e.g., is saved in the repository associated with the first application) (e.g., as described with respect to FIGS. 5C and 5Q).

In some examples, a representation of a set of one or more words is compared (e.g., by suggestion gating unit 364) to a second representation of the view of the 3D scene (e.g., the 3D scene of FIG. 5A, 5B, and/or 5C), wherein the set of one or more words describe a condition for the view of the 3D scene, that when satisfied, prevents the presentation of suggested actions for the view of the 3D scene; the suggestion criterion is satisfied when the representation of the set of one or more words does not match the second representation of the view of the 3D scene; and the suggestion criterion is not satisfied when the representation of the set of one or more words matches the second representation of the view of the 3D scene.

In some examples, the set of one or more words is determined (e.g., by suggestion gating unit 364) based on the view of the 3D scene.

In some examples, the second representation of the view of the 3D scene is generated in accordance with a determination (e.g., by suggestion gating unit 364) that the view of the 3D scene satisfies a set of stability criteria.

In some examples, method 600 includes, at the second computer system: while displaying, via the display generation component, a content object (e.g., 527), receiving a user input (e.g., 526) corresponding to a request to save the content object in association with the first application (e.g., save for later application 331); and in response to receiving the user input corresponding to the request to save the content object in association with the first application, causing the content object to be saved in association with the first application (e.g., saved in the repository associated with the first application).

In some examples, method 600 includes, at the second computer system: after the view of the 3D scene (e.g., 518) is captured via the one or more image sensors (and optionally, saved in the repository associated with the first application), in accordance with a determination that a fourth suggested action satisfies a set of suggestion presentation criterion, displaying, via the display generation component and in a suggestion user interface (e.g., 590) different from the first user interface of the first application, a respective suggestion graphical element (e.g., 592) corresponding to the fourth suggested action, wherein the fourth suggested action is determined based on performing image recognition on the view of the 3D scene and/or based on the context information (e.g., 373).

In some examples, the second computer system includes an application programming interface (API) (e.g., 332) that enables a requestor application (e.g., 333) to communicate with the first application (e.g., 331) and method 600 includes, at the second computer system: sending, by the requestor application and via the API, an API call to the first application; in response to receiving the API call from the requestor application, providing, by the first application and via the API, user information (e.g., 376) that is determined based on one or more objects (e.g., 560 and/or 556) that are saved in association with the first application (e.g., that are saved in the repository associated with the first application); and after the requestor application receives the user information: receiving a user input (e.g., 596) corresponding to a request to display a user interface of the requestor application (e.g., 598); and in response to receiving the user input corresponding to the request to display the user interface of the requestor application, displaying the user interface of the requestor application, including displaying a suggestion (e.g., 599) that is determined based on the user information.

In some examples, a respective representation of the view of the 3D scene (and/or the view of the 3D scene) is/are saved in a repository associated with the first application (e.g., 331) and the first user interface of the first application is displayed after the respective representation of the view of the 3D scene (and/or the view of the 3D scene) is/are saved in the repository associated with the first application.

Exemplary methods, computer systems, and non-transitory computer-readable storage media are set out in the following items.
1. A method, comprising:
   at a first computer system that is in communication with one or more image sensors:
      receiving a user input corresponding to a request to save an object in a three-dimensional (3D) scene; and
      in response to receiving the user input corresponding to the request to save the object in the 3D scene, capturing, via the one or more image sensors, a view of the 3D scene; and
   at a second computer system that is in communication with a display generation component:
      after the view of the 3D scene is captured via the one or more image sensors, displaying, via the display generation component, a first user interface of a first application, wherein:
      displaying the first user interface of the first application includes displaying a first suggestion graphical element;
      the first suggestion graphical element is selectable to cause the second computer system to perform, via a second application different from the first application, a first suggested action; and
      the first suggested action is determined based on performing image recognition on the view of the 3D scene and based on context information that is different from the view of the 3D scene.
2. The method of item 1, further comprising:
   at the second computer system that is in communication with the display generation component:
   while displaying, via the display generation component, the first user interface of the first application, receiving a user input corresponding to a selection of the first suggestion graphical element; and
   in response to receiving the user input corresponding to the selection of the first suggestion graphical element, initiating, via the second application, the first suggested action.
3. The method of any one of items 1-2, wherein the first computer system is the second computer system.
4. The method of any one of items 1-2, wherein the first computer system is different from the second computer system.
5. The method of any one of items 1-4, wherein the user input corresponding to the request to save the object in the 3D scene corresponds to a first type of user input, the method further comprising:
   at the first computer system that is in communication with the one or more image sensors:
   receiving a user input corresponding to a request to capture an image of the 3D scene, wherein the user input corresponding to the request to capture an image of the 3D scene corresponds to a second type of user input different from the first type of user input; and
   in response to receiving the user input corresponding to the request to capture an image of the of 3D scene, capturing, via the one or more image sensors, a respective image of the 3D scene.
6. The method of item 5, further comprising:
   at the first computer system that is in communication with the one or more image sensors:
   concurrently displaying a save graphical element and an image capture graphical element, wherein the user input corresponding to the request to save the object in the 3D scene corresponds to a selection of the save graphical element, and wherein the user input corresponding to the request to capture an image of the 3D scene corresponds to a selection of the image capture graphical element.
7. The method of any one of items 5-6, further comprising:
   at the second computer system that is in communication with the display generation component:
   displaying, via the display generation component, a second user interface of the first application, wherein displaying the second user interface of the first application includes displaying the view of the 3D scene, and wherein the respective image of the 3D scene is not available for display in the second user interface of the first application; and
   displaying, via the display generation component, a first user interface of a third application different from the first application, wherein displaying the first user interface of the third application includes displaying the respective image of the 3D scene, and wherein the view of the 3D scene is not available for display in the first user interface of the third application.
8. The method of any one of items 5-7, further comprising:
   at the second computer system that is in communication with the display generation component:
   displaying, via the display generation component, a third user interface of the first application, wherein displaying the third user interface of the first application includes displaying the view of the 3D scene, and wherein the respective image of the 3D scene is not available for display in the third user interface of the first application; and
   displaying, via the display generation component, a fourth user interface of the first application, wherein the fourth user interface of the first application is different from the third user interface of the first application, and wherein displaying the fourth user interface of the first application includes displaying the respective image of the 3D scene, and wherein the view of the 3D scene is not available for display in the fourth user interface of the first application.
9. The method of any one of items 1-8, wherein the context information includes information that is personal to a user of the first computer system and/or the second computer system.
10. The method of item 9, wherein the information that is personal to the user includes a second object that is saved in association with the first application, wherein the second object is different from the object in the 3D scene.
11. The method of any one of items 1-10, wherein the context information includes a location of the first computer system when the user input corresponding to the request to save the object in the 3D scene is received.
12. The method of any one of items 9-11, further comprising:
   at the first computer system that is in communication with the one or more image sensors:
   capturing data representing the 3D scene, wherein the data representing the 3D scene is different from the view of the 3D scene, and wherein the context information includes the data representing the 3D scene.
13. The method of any one of items 1-12, further comprising:
   at the first computer system that is in communication with the one or more image sensors:
   detecting attention of a user of the first computer system, wherein the context information includes the attention of the user of the first computer system.
14. The method of any one of items 1-13, further comprising:
   at the second computer system that is in communication with the display generation component:
   displaying, via the display generation component, an indication that the object is assigned to a first category, wherein the first category is determined based on the context information.
15. The method of any one of items 1-14, wherein:
   displaying the first user interface of the first application further includes displaying a second suggestion graphical element;
   the second suggestion graphical element is selectable to cause the second computer system to perform, via a fourth application, a second suggested action; and
   the second suggested action is determined based on performing image recognition on the view of the 3D scene and based on the context information.
16. The method of item 15, wherein the fourth application is different from the second application.
17. The method of any one of items 1-16, further comprising:
   at the first computer system that is in communication with the one or more image sensors:
   before receiving the user input corresponding to the request to save the object in the 3D scene:
   detecting, via the one or more image sensors, a respective object in the 3D scene; and
   in response to detecting, via the one or more image sensors, the respective object in the 3D scene:
      in accordance with a determination that a suggestion criterion is satisfied, presenting a third suggested action that is determined based on the respective object; and
      in accordance with a determination that the suggestion criterion is not satisfied, forgoing presenting the third suggested action.
18. The method of item 17, further comprising:
   at the first computer system that is in communication with the one or more image sensors:
   displaying a camera user interface, wherein presenting the third suggested action that is determined based on the respective object includes displaying the third suggested action in the camera user interface.
19. The method of any one of items 17-18, wherein the third suggested action is determined based on analyzing the view 3D scene with a first type of process.
20. The method of item 19, wherein the first suggested action is determined based on analyzing the view of the 3D scene with a second type of process different from the first type of process.
21. The method of item 20, wherein:
   the view of the 3D scene is not analyzed with the second type of process until after the view of the 3D scene is captured and after a first representation of the view of the 3D scene is saved in association with the first application.
22. The method of any one of items 17-21, wherein:
   a representation of a set of one or more words is compared to a second representation of the view of the 3D scene, wherein the set of one or more words describe a condition for the view of the 3D scene, that when satisfied, prevents the presentation of suggested actions for the view of the 3D scene;
   the suggestion criterion is satisfied when the representation of the set of one or more words does not match the second representation of the view of the 3D scene; and
   the suggestion criterion is not satisfied when the representation of the set of one or more words matches the second representation of the view of the 3D scene.
23. The method of item 22, wherein the set of one or more words is determined based on the view of the 3D scene.
24. The method of any one of items 22-23, wherein the second representation of the view of the 3D scene is generated in accordance with a determination that the view of the 3D scene satisfies a set of stability criteria.
25. The method of any one of items 1-24, further comprising:
   at the second computer system that is in communication with the display generation component:
   while displaying, via the display generation component, a content object, receiving a user input corresponding to a request to save the content object in association with the first application; and
   in response to receiving the user input corresponding to the request to save the content object in association with the first application, causing a representation of the content object to be saved in association with the first application.
26. The method of any one of items 1-25, further comprising:
   at the second computer system that is in communication with the display generation component:
   after the view of the 3D scene is captured via the one or more image sensors, in accordance with a determination that a fourth suggested action satisfies a set of suggestion presentation criterion, displaying, via the display generation component and in a suggestion user interface different from the first user interface of the first application, a respective suggestion graphical element corresponding to the fourth suggested action, wherein the fourth suggested action is determined based on performing image recognition on the view of the 3D scene and/or based on the context information.
27. The method of any one of items 1-26, wherein the second computer system includes an application programming interface (API) that enables a requestor application to communicate with the first application, the method further comprising:
   at the second computer system that is in communication with the display generation component:
   sending, by the requestor application and via the API, an API call to the first application;
   in response to receiving the API call from the requestor application, providing, by the first application and via the API, user information that is determined based on one or more objects that are saved in association with the first application; and
   after the requestor application receives the user information:
      receiving a user input corresponding to a request to display a user interface of the requestor application; and
      in response to receiving the user input corresponding to the request to display the user interface of the requestor application, displaying the user interface of the requestor application, including displaying a suggestion that is determined based on the user information.
28. The method of any one of items 1-27, wherein a respective representation of the view of the 3D scene is saved in a repository associated with the first application, and wherein the first user interface of the first application is displayed after the respective representation of the view of the 3D scene is saved in the repository associated with the first application.
29. One or more non-transitory computer-readable storage media storing one or more programs configured to be executed by one or more processors of one or more computer systems that are in communication with one or more image sensors and a display generation component, the one or more programs including instructions for performing the method of any of items 1-28.
30. One or more computer systems configured to communicate with one or more image sensors and a display generation component, the one or more computer systems comprising:
   one or more processors; and
   one or more memories storing one or more programs configured to be executed by the one or more processors, the one or more programs including instructions for performing the method of any of items 1-28.
31. One or more computer systems configured to communicate with one or more image sensors and a display generation component, the one or more computer systems comprising:
   means for performing the method of any of items 1-28.
32. One or more non-transitory computer-readable storage media storing one or more programs configured to be executed by one or more processors of one or more computer systems that are in communication with one or more image sensors and a display generation component, the one or more programs including instructions for:
   receiving, by a first computer system of the one or more computer systems, a user input corresponding to a request to save an object in a three-dimensional (3D) scene;
   in response to receiving the user input corresponding to the request to save the object in the 3D scene, capturing, by the first computer system and via the one or more image sensors, a view of the 3D scene; and
   after the view of the 3D scene is captured via the one or more image sensors, displaying, by a second computer system of the one or more computer systems and via the display generation component, a first user interface of a first application, wherein:
      displaying the first user interface of the first application includes displaying a first suggestion graphical element;
      the first suggestion graphical element is selectable to cause the second computer system to perform, via a second application different from the first application, a first suggested action; and
      the first suggested action is determined based on performing image recognition on the view of the 3D scene and based on context information that is different from the view of the 3D scene.
33. One or more computer systems configured to communicate with one or more image sensors and a display generation component, the one or more computer systems comprising:
   one or more processors; and
   one or more memories storing one or more programs configured to be executed by the one or more processors, the one or more programs including instructions for:
      receiving, by a first computer system of the one or more computer systems, a user input corresponding to a request to save an object in a three-dimensional (3D) scene;
      in response to receiving the user input corresponding to the request to save the object in the 3D scene, capturing, by the first computer system and via the one or more image sensors, a view of the 3D scene; and
      after the view of the 3D scene is captured via the one or more image sensors, displaying, by a second computer system of the one or more computer systems and via the display generation component, a first user interface of a first application, wherein:
         displaying the first user interface of the first application includes displaying a first suggestion graphical element;
         the first suggestion graphical element is selectable to cause the second computer system to perform, via a second application different from the first application, a first suggested action; and
         the first suggested action is determined based on performing image recognition on the view of the 3D scene and based on context information that is different from the view of the 3D scene.
34. One or more computer systems configured to communicate with one or more image sensors and a display generation component, the one or more computer systems comprising:
   means for receiving, by a first computer system of the one or more computer systems, a user input corresponding to a request to save an object in a three-dimensional (3D) scene;
   means, in response to receiving the user input corresponding to the request to save the object in the 3D scene, for capturing, by the first computer system and via the one or more image sensors, a view of the 3D scene; and
   means, after the view of the 3D scene is captured by the first computer system and via the one or more image sensors, for displaying, by a second computer system of the one or more computer systems and via the display generation component, a first user interface of a first application, wherein:
      displaying the first user interface of the first application includes displaying a first suggestion graphical element;
      the first suggestion graphical element is selectable to cause the second computer system to perform, via a second application different from the first application, a first suggested action; and
      the first suggested action is determined based on performing image recognition on the view of the 3D scene and based on context information that is different from the view of the 3D scene.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

As described above, one aspect of the present technology is the gathering and use of data available from various sources to present suggested actions to a user. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to provide accurate and/or relevant suggested actions. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of presenting suggested actions to a user, the present technology can be configured to allow users to select to "opt in" or "opt out" of participation in the collection of personal information data during registration for services or anytime thereafter. In another example, users can select not to provide personal information data based on which suggested actions are determined. In yet another example, users can select to limit the length of time for which such data is maintained. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, suggested actions can be generated based on non-personal information data or a bare minimum amount of personal information, such as the content being requested by the device associated with a user, other non-personal information available to the service, or publicly available information.

## Claims

1. A method, comprising:
at a first computer system that is in communication with one or more image sensors:
receiving a user input corresponding to a request to save an object in a three-dimensional (3D) scene; and
in response to receiving the user input corresponding to the request to save the object in the 3D scene, capturing, via the one or more image sensors, a view of the 3D scene; and
at a second computer system that is in communication with a display generation component:
after the view of the 3D scene is captured via the one or more image sensors, displaying, via the display generation component, a first user interface of a first application, wherein:
displaying the first user interface of the first application includes displaying a first suggestion graphical element;
the first suggestion graphical element is selectable to cause the second computer system to perform, via a second application different from the first application, a first suggested action; and
the first suggested action is determined based on performing image recognition on the view of the 3D scene and based on context information that is different from the view of the 3D scene.

2. The method of claim 1, further comprising:
at the second computer system that is in communication with the display generation component:
while displaying, via the display generation component, the first user interface of the first application, receiving a user input corresponding to a selection of the first suggestion graphical element; and
in response to receiving the user input corresponding to the selection of the first suggestion graphical element, initiating, via the second application, the first suggested action.

3. The method of any one of claims 1-2, wherein the first computer system is the second computer system.

4. The method of any one of claims 1-2, wherein the first computer system is different from the second computer system.

5. The method of any one of claims 1-4, wherein the user input corresponding to the request to save the object in the 3D scene corresponds to a first type of user input, the method further comprising:
at the first computer system that is in communication with the one or more image sensors:
receiving a user input corresponding to a request to capture an image of the 3D scene, wherein the user input corresponding to the request to capture an image of the 3D scene corresponds to a second type of user input different from the first type of user input; and
in response to receiving the user input corresponding to the request to capture an image of the of 3D scene, capturing, via the one or more image sensors, a respective image of the 3D scene.

6. The method of claim 5, further comprising:
at the first computer system that is in communication with the one or more image sensors:
concurrently displaying a save graphical element and an image capture graphical element, wherein the user input corresponding to the request to save the object in the 3D scene corresponds to a selection of the save graphical element, and wherein the user input corresponding to the request to capture an image of the 3D scene corresponds to a selection of the image capture graphical element.

7. The method of any one of claims 1-6, wherein the context information includes information that is personal to a user of the first computer system and/or the second computer system.

8. The method of claim 7, wherein the information that is personal to the user includes a second object that is saved in association with the first application, wherein the second object is different from the object in the 3D scene.

9. The method of any one of claims 1-8, wherein the context information includes a location of the first computer system when the user input corresponding to the request to save the object in the 3D scene is received.

10. The method of any one of claims 7-9, further comprising:
at the first computer system that is in communication with the one or more image sensors:
capturing data representing the 3D scene, wherein the data representing the 3D scene is different from the view of the 3D scene, and wherein the context information includes the data representing the 3D scene.

11. The method of any one of claims 1-10, further comprising:
at the first computer system that is in communication with the one or more image sensors:
detecting attention of a user of the first computer system, wherein the context information includes the attention of the user of the first computer system.

12. The method of any one of claims 1-11, further comprising:
at the second computer system that is in communication with the display generation component:
displaying, via the display generation component, an indication that the object is assigned to a first category, wherein the first category is determined based on the context information.

13. The method of any one of claims 1-12, wherein the second computer system includes an application programming interface (API) that enables a requestor application to communicate with the first application, the method further comprising:
at the second computer system that is in communication with the display generation component:
sending, by the requestor application and via the API, an API call to the first application;
in response to receiving the API call from the requestor application, providing, by the first application and via the API, user information that is determined based on one or more objects that are saved in association with the first application; and
after the requestor application receives the user information:
receiving a user input corresponding to a request to display a user interface of the requestor application; and
in response to receiving the user input corresponding to the request to display the user interface of the requestor application, displaying the user interface of the requestor application, including displaying a suggestion that is determined based on the user information.

14. One or more non-transitory computer-readable storage media storing one or more programs configured to be executed by one or more processors of one or more computer systems that are in communication with one or more image sensors and a display generation component, the one or more programs including instructions for performing the method of any of claims 1-13.

15. One or more computer systems configured to communicate with one or more image sensors and a display generation component, the one or more computer systems comprising:
one or more processors; and
one or more memories storing one or more programs configured to be executed by the one or more processors, the one or more programs including instructions for performing the method of any of claims 1-13.
